(19) Europäisches Patentamt
European Patent Office
Office européen des brevets

(11) EP 3 608 096 A1

(12) **EUROPEAN PATENT APPLICATION**
published in accordance with Art. 153(4) EPC

(43) Date of publication:
**12.02.2020 Bulletin 2020/07**

(51) Int Cl.:
**B31F 1/24** (2006.01)  **G01B 11/02** (2006.01)
**G01N 21/892** (2006.01)

(21) Application number: **18798794.6**

(22) Date of filing: **09.02.2018**

(86) International application number:
**PCT/JP2018/004740**

(87) International publication number:
**WO 2018/207419 (15.11.2018 Gazette 2018/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **12.05.2017 JP 2017095608**

(71) Applicant: **Mitsubishi Heavy Industries Machinery Systems, Ltd.**
**Kobe-shi, Hyogo 652-8585 (JP)**

(72) Inventors:
• **TAKEMOTO, Shuichi**
  **Mihara-shi**
  **Hiroshima 729-0393 (JP)**
• **FUKUSHIGE, Naoyuki**
  **Mihara-shi**
  **Hiroshima 729-0393 (JP)**

(74) Representative: **Hoffmann Eitle**
**Patent- und Rechtsanwälte PartmbB**
**Arabellastraße 30**
**81925 München (DE)**

(54) **CARDBOARD SHEET DEFECT DETECTION DEVICE, CARDBOARD SHEET DEFECT REMOVAL DEVICE, AND CARDBOARD SHEET PRODUCTION DEVICE**

(57)     There are provided a cardboard sheet defect detection device, a cardboard sheet defect removal device, and a cardboard sheet production device. A cardboard sheet defect detection device (40): that detects defects in a wave-shaped corrugated medium (B) that is stuck onto a back liner (C); and that comprises an imaging device (52) that captures images of the corrugated medium (B), which is part of a single-sided cardboard sheet (D), an inspection position setting device (56) that, on the basis of width information for the single-sided cardboard sheet (D), sets a plurality of inspection positions in the width direction of the single-sided cardboard sheet (D), and a determination device (58) that, on the basis of photographic images captured by the imaging unit (52) at the plurality of inspection positions set by the inspection position setting device (56), determines whether the single-sided cardboard sheet (D) is quality.

FIG. 3

EP 3 608 096 A1

**Description**

Technical Field

The present invention relates to a cardboard sheet defect detection device for detecting a defect of a cardboard sheet in which a front liner, a corrugated core, and a back liner are bonded together, a cardboard sheet defect removal device including the cardboard sheet defect detection device, and a cardboard sheet production device including the cardboard sheet defect removal device.

Background Art

A corrugating machine serving as a cardboard sheet production device includes a single facer which forms a single-faced cardboard sheet, and a double facer which forms a double-faced cardboard sheet by bonding a front liner sheet to the single-faced cardboard sheet. The single facer processes a core into a corrugated shape, bonds a back liner thereto so as to form the single-faced cardboard sheet. The double facer bonds the single-faced cardboard sheet to the front liner so as to form the double-faced cardboard sheet. The continuous double-faced cardboard sheet produced by the double facer is cut into a predetermined width by a slitter scorer, and is cut into a predetermined length by a cutoff device, thereby forming a cardboard sheet.

In the corrugating machine, when the single-faced cardboard sheet is formed by bonding the corrugated core to the back liner, a corrugated tip of the core may be deformed in some cases. If the core is deformed, a bonding defect may occur or a thickness of the double-faced cardboard sheet may be uneven in some cases, when the front liner is bonded to the single-faced cardboard sheet, thereby causing a possibility that a defective cardboard sheet may be produced.

As a cardboard sheet defect detection device for detecting deformation of the core in the single-faced cardboard sheet, for example, a defect detection device disclosed in PTL 1 below is known. The defect detection device of a corrugated cardboard flute which is disclosed in PTL 1 receives reflected light of inspection light reflected on a flute tip. If a detected light receiving position falls within an allowable range, the defect detection device determines the flute as a "satisfactory quality" indicating that a flute height falls within the allowable range. If the detected light receiving position is out of the allowable range, the defect detection device determines the flute as a "defect" indicating that the flute height is out of the allowable range. In this manner, the defect detection device changes the allowable range of the light receiving position so that the allowable range of the flute height is compatible with different types of the corrugated cardboard flutes.

Citation List

Patent Literature

[PTL 1] Japanese Patent No. 4857382

Summary of Invention

Technical Problem

The cardboard sheet defect detection device sets a plurality of inspection positions at a predetermined interval in a width direction of a cardboard sheet. In addition, a single-faced cardboard sheet may meander as much as a predetermined amount when transported. Consequently, the defect detection device has a possibility that a location where the single-faced cardboard sheet is not present due to the meandering may be determined as a defect. Therefore, in view of a meandering amount of the single-faced cardboard sheet, the defect detection device sets a region (width) where a defect inspection is not performed, over a predetermined range from an end portion in a width direction of the single-faced cardboard sheet. Therefore, depending on the width of the cardboard sheet to be inspected, there are fluctuations in the region (width) where the defect inspection is not performed by the defect detection device. When the region (width) is widened where the defect inspection is not performed, there is a high possibility that the defect may be missed without being detected.

The present invention is made to solve the above-described problems, and aims to provide a cardboard sheet defect detection device a cardboard sheet defect removal device, and a cardboard sheet production device in which defect detection accuracy of a cardboard sheet is improved by reducing a non-inspection region of the cardboard sheet.

Solution to Problem

According to the present invention, in order to achieve the above-described object, there is provided a cardboard sheet defect detection device for detecting a defect of a corrugated core bonded to a liner. The cardboard sheet defect detection device includes an imaging device that images the core of a single-faced cardboard sheet formed by bonding the corrugated core to the liner, over an entire region in a width direction, an inspection position setting device that sets a plurality of inspection positions in the width direction of the cardboard sheet, based on width information of the cardboard sheet, and a determination device that determines a quality of the cardboard sheet, based on a captured image at the plurality of inspection positions set by the inspection position setting device from the captured image in the entire region in the width direction which is imaged by the imaging device.

Therefore, based on the width information of the cardboard sheet, the plurality of inspection positions are set in the width direction of the cardboard sheet, and the quality of the cardboard sheet is determined based on the captured image at the plurality of inspection positions from the captured image captured by the imaging device. Accordingly, the determination device determines the quality of the cardboard sheet, based on the width information of the cardboard sheet and based on the captured image at an optimum inspection position in the width direction of the cardboard sheet. As a result, defect detection accuracy of the cardboard sheet can be improved by reducing the non-inspection regions in an end portion of the cardboard sheet.

In the cardboard sheet defect detection device according to the present invention, the inspection position setting device may set non-inspection regions in respective end portions in the width direction in the cardboard sheet, and may set the plurality of inspection positions at every predetermined interval in an inspection region set between the non-inspection regions of the respective end portions.

Therefore, the non-inspection regions are first set in respective end portions in the width direction in the cardboard sheet, and thereafter, the plurality of inspection positions are set in the inspection region set between the respective non-inspection regions. In this manner, regardless of the width dimension of the cardboard sheet, the non-inspection regions having a desired dimension can be set, and the non-inspection regions can be prevented from being widened after the width of the cardboard sheet is changed.

In the cardboard sheet defect detection device according to the present invention, the plurality of inspection positions may be set in the inspection region at an equal interval.

Therefore, the plurality of inspection positions are set in the inspection region at the equal interval. In this manner, it is possible to prevent variations in quality determination accuracy of the cardboard sheet.

In the cardboard sheet defect detection device according to the present invention, setting density of the plurality of inspection positions on each end portion side in the width direction of the cardboard sheet may be set to be higher than setting density of the plurality of inspection positions on a center side in the width direction of the cardboard sheet.

Therefore, the interval in the plurality of inspection positions is narrowed on each end portion side in the width direction of the cardboard sheet, and the interval in the plurality of inspection positions is widened on the center side. In this manner, the end portion side on which a bonding defect is likely to occur can be inspected in detail, and the quality determination accuracy of the cardboard sheet can be improved.

The cardboard sheet defect detection device according to the present invention may further include a notification device that performs notification of defect occurrence when the defect of the cardboard sheet is determined by the determination device.

Therefore, the operator is notified of the defect occurrence when the defect of the cardboard sheet is determined. In this manner, an earlier countermeasure can be taken by notifying the operator of the defect occurrence.

In the cardboard sheet defect detection device according to the present invention, the notification device may issue an alarm.

Therefore, the alarm is issued when the defect of the cardboard sheet is determined. In this manner, the operator can be accurately notified of the defect occurrence.

The cardboard sheet defect detection device according to the present invention may further include a display device that displays an image of the cardboard sheet which is determined by the determination device.

Therefore, when the defect of the cardboard sheet is determined, the image of the cardboard sheet determined as the defect is displayed on the display device. In this manner, the operator can recognize a form of the defect by using the image displayed on the display device.

The cardboard sheet defect detection device according to the present invention may further include a storage device that stores an image of the cardboard sheet which is determined by the determination device.

Therefore, when the defect of the cardboard sheet is determined, the image of the cardboard sheet determined as the defect is stored in the storage device. In this manner, the operator can recognize a form of the defect later by using the image stored in the storage device.

In the cardboard sheet defect detection device according to the present invention, when a width dimension of the cardboard sheet is changed, the inspection position setting device may reset the plurality of inspection positions in the width direction of the cardboard sheet, based on the width information of the cardboard sheet.

Therefore, each time the width dimension of the cardboard sheet is changed, the plurality of inspection positions are reset in the width direction of the cardboard sheet. In this manner, the quality of the cardboard sheet is always determined based on the captured image at an optimum inspection position with respect to the width dimension of the cardboard sheet.

In the cardboard sheet defect detection device according to the present invention, the determination device may determine the quality of the cardboard sheet by comparing the captured image captured by the imaging device and a shape determination value of the core with each other. The shape determination value may have a first determination value to be set in advance, and a second determination value to be set based on the captured image captured by the imaging device after the quality starts to be determined using the first determination value. The determination device may be capable of switching between the first determination value and the second determination value.

Therefore, when the quality of the cardboard sheet is determined by comparing the captured image and the shape determination value of the core with each other from the captured image captured by the imaging device, the determination device determines the quality of the cardboard sheet by comparing the captured image and the first determination value with each other, and sets the second determination value, based on the captured image captured by the imaging device after the quality starts to be determined using the first determination value. If the second determination value is set, the first determination value is switched to the second determination value, and the quality of the cardboard sheet is determined by comparing the captured image and the second determination value with each other. As a result, the quality of the cardboard sheet is determined using the second determination value corresponding to characteristics of the imaging device. In this manner, the defect detection accuracy of the cardboard sheet can be improved.

In the cardboard sheet defect detection device according to the present invention, the determination device may determine the quality of the cardboard sheet by comparing the captured image at the plurality of inspection positions in the width direction of the cardboard sheet and the shape determination value set at each of the plurality of inspection position. The first determination value may be set to a constant value corresponding to the plurality of inspection positions, and the second determination value may be set to an individual value corresponding to the plurality of inspection positions.

Therefore, the determination device sets the constant value corresponding to the plurality of inspection positions, as the first determination value, and sets the second determination value, as the individual value corresponding to the plurality of inspection positions. The first determination value can be easily set in advance using a design value of the cardboard sheet, and a result of the quality determination of the cardboard sheet is used by the first determination value. In this manner, the second determination value can be highly accurately set in accordance with the plurality of inspection positions.

In the cardboard sheet defect detection device according to the present invention, the second determination value may be set based on the captured image in which a quality product is determined using the first determination value by the determination device.

Therefore, the second determination value is set based on the captured image in which the quality product is determined using the first determination value by the determination device determines. In this manner, the second determination value corresponds to the characteristics of the imaging device can be highly accurately set, and the defect detection accuracy of the cardboard sheet can be improved.

In the cardboard sheet defect detection device according to the present invention, the second determination value may be set based on an average value of the plurality of captured images in which the quality product is determined using the first determination value by the determination device.

Therefore, the second determination value is set based on the average value of the plurality of captured images in which the quality product is determined using the first determination value by the determination device. In this manner, the second determination value can be highly accurately set corresponding to the characteristics of the imaging device.

In the cardboard sheet defect detection device according to the present invention, the second determination value may be set by adding a preset margin value to the average value of the plurality of captured images in which the quality product is determined using the first determination value by the determination device.

Therefore, the second determination value is set by adding the margin value to the average value of the plurality of captured images in which the quality product is determined using the first determination value by the determination device. In this manner, the second determination value can be highly accurately set corresponding to the characteristics of the imaging device.

In the cardboard sheet defect detection device according to the present invention, the second determination value may be set based on a maximum value or a minimum value of the plurality of captured images in which the quality product is determined using the first determination value by the determination device.

Therefore, the second determination value is set based on the maximum value or the minimum value of the plurality of captured images in which the quality product is determined using the first determination value by the determination device. In this manner, the region of the second determination value can be highly accurately set corresponding to the characteristics of the imaging device.

In the cardboard sheet defect detection device according to the present invention, the second determination value may be set by adding a preset margin value to the maximum value or the minimum value of the plurality of captured images in which the quality product is determined using the first determination value by the determination device.

Therefore, the second determination value is set by adding the margin value to the maximum value or the minimum value of the plurality of captured images in which the quality product is determined using the first determination value by the determination device. In this manner, the region of the second determination value can be highly accurately set corresponding to the characteristics of the imaging device.

In the cardboard sheet defect detection device according to the present invention, the second determination value may be set after a transport speed of the cardboard sheet reaches a preset determination value setting speed and is maintained at a constant speed.

Therefore, the second determination value is set after the transport speed of the cardboard sheet reaches the determination value setting speed and is maintained at the constant speed. In this manner, the plurality of captured images captured by the imaging device are optimized, and the defect detection accuracy of the cardboard sheet can be improved.

In the cardboard sheet defect detection device according to the present invention, the second determination value may be set after a preset predetermined time elapses from when the transport speed of the cardboard sheet is maintained at the constant speed.

Therefore, the second determination value is set after the predetermined time elapses from when the transport speed of the cardboard sheet reaches the determination value setting speed and is maintained at the constant speed. In this manner, in a state where a transport state of the cardboard sheet is stabilized, the imaging device images the core. Accordingly, the captured images can be optimized, and the defect detection accuracy of the cardboard sheet can be improved.

In the cardboard sheet defect detection device according to the present invention, when a type of the cardboard sheet is changed, the determination device may switch the second determination value to the first determination value, and sets the second determination value, based on the captured image captured by the imaging device after the quality starts to be determined using the first determination value.

Therefore, if the type of the cardboard sheet is changed, the determination device switches the quality determination using the second determination value to the quality determination using the first determination value, and resets the second determination value. In this manner, the quality of the cardboard sheet can be continuously determined, and an optimum second determination value can be set corresponding to the type of the cardboard sheet.

In the cardboard sheet defect detection device according to the present invention, the second determination value may be switched to the first determination value by the determination device when a sheet splice portion of the cardboard sheet passes an imaging position imaged by the imaging device.

Therefore, the sheet splice portion of the cardboard sheet is determined as the defect by another defect detection device. Accordingly, when the sheet splice portion of the cardboard sheet passes the imaging position, the second determination value is switched to the first determination value. In this manner, it is possible to prevent a possibility that a defective product may not be detected or a possibility that a quality product may be erroneously detected.

The cardboard sheet defect detection device according to the present invention may further include an irradiation device that irradiates the core with light at an irradiation angle inclined as much as a preset predetermined angle with respect to the cardboard sheet, and an image processing device that defines at least any one of a bright section and a dark section along a transport direction of the cardboard sheet, based on the captured image captured by the imaging device. The determination device may determine the quality by comparing a preset determination value with at least any one of a length of the bright section and a length of the dark section which are defined by the image processing device.

Therefore, if the irradiation device irradiates the core of the cardboard sheet with the light, the imaging device images a light irradiated portion in the core, and the image processing device defines the bright section and the dark section along the transport direction of the cardboard sheet, based on the captured image. The determination device determines the quality of the cardboard sheet by comparing the length of the bright section and the length of the dark section with the determination value. In this case, the defect of the core, that is, the defect of the cardboard sheet is detected based on the length of the bright section and the dark section which are formed by a shade of a tip of the corrugated core. Therefore, a crushed defect, a height defect, and a length defect of the tip of the core can be detected, and the defect of the cardboard sheet which is caused by the deformation of the corrugated tip in the core can be highly accurately detected.

In addition, according to the present invention, there is provided a cardboard sheet defect removal device including the cardboard sheet defect detection device, and a discharge device that discharges a double-faced cardboard sheet cut into a predetermined length which includes a defective location detected by the cardboard sheet defect detection device.

Therefore, the cardboard sheet defect detection device determines the quality of the cardboard sheet, based on the width information of the cardboard sheet and based on the captured image at the optimum inspection position in the width direction of the cardboard sheet. As a result, the defect detection accuracy of the cardboard sheet can be improved by reducing the non-inspection regions in the end portion of the cardboard sheet.

In addition, according to the present invention, there is provided a cardboard sheet production device including a single facer that produces a single-faced cardboard sheet by bonding a second liner to a corrugated core, a double facer that produces a double-faced cardboard sheet by bonding a first liner to the core side in the single-faced cardboard sheet, and the cardboard sheet defect removal device.

Therefore, the single facer produces the single-faced cardboard sheet by bonding the second liner to the corrugated core, and the double facer produces the double-faced cardboard sheet by bonding the first liner to the core side in the single-faced cardboard sheet produced by the single facer. In this case, the defect removal device detects the defect of the cardboard sheet, and the discharge device discharges and removes the double-faced cardboard sheet cut into the predetermined length which includes the defective location, from the transport line. Therefore, the defect detection accuracy of the cardboard sheet can be improved by reducing the non-inspection regions in the end portion of the cardboard sheet.

In the cardboard sheet production device according to the present invention, when the defect of the cardboard sheet is determined by the cardboard sheet defect detection device, the transport speed of the cardboard sheet may be lowered.

Therefore, when the single facer bonds the second liner to the corrugated core, the corrugated core is glued. Thereafter, the second liner is pressed, heated, and bonded so as to produce the single-faced cardboard sheet. Accordingly, when the defect of the cardboard sheet occurs, the transport speed of the single-faced cardboard sheet is lowered. In this manner, it is possible to increase a pressing time or a heating time of the single-faced cardboard sheet, and it is possible to prevent the occurrence of the bonding defect.

Advantageous Effects of Invention

According to the cardboard sheet defect detection device, the cardboard sheet defect removal device, and the cardboard sheet production device of the present invention, the defect detection accuracy of the cardboard sheet can be improved by reducing the non-inspection regions in the cardboard sheet.

Brief Description of Drawings

Fig. 1 is a schematic view illustrating a corrugating machine serving as a cardboard sheet production device according to the present embodiment.
Fig. 2 is a schematic view of a main part of a single facer on which a cardboard sheet defect detection device according to the present embodiment is mounted.
Fig. 3 is a schematic configuration diagram illustrating the cardboard sheet defect detection device according to the present embodiment.
Fig. 4 is a side view illustrating a configuration where an irradiation device and an imaging device are arranged for a single-faced cardboard sheet.
Fig. 5 is a plan view illustrating a configuration where the irradiation device and the imaging device are arranged for the single-faced cardboard sheet.
Fig. 6 is a schematic configuration diagram illustrating the imaging device.
Fig. 7 is a schematic view for describing an irradiation angle of the irradiation device with respect to a core of the single-faced cardboard sheet.
Fig. 8 is a schematic view illustrating an action of illumination light on the core of the single-faced cardboard sheet.
Fig. 9 is a schematic view illustrating a detection position used by the cardboard sheet defect detection device.
Fig. 10 is a flowchart for describing an image processing method.
Fig. 11 is a view for describing the image processing method.
Fig. 12 is a schematic view illustrating a defect image of a cardboard sheet displayed on a display device.
Fig. 13 is a flowchart for describing a first modification example of the image processing method.
Fig. 14 is a flowchart for describing a second modification example of the image processing method.
Fig. 15 is a flowchart for describing an operation of the cardboard sheet defect detection device.
Fig. 16 is a time chart for describing an operation of the cardboard sheet defect detection device.
Fig. 17 is a graph illustrating a relationship among an average value, a maximum value, a minimum value, and a determination value of a flute ratio with respect to a plurality of inspection positions.

Description of Embodiments

Hereinafter, referring to the accompanying drawings, preferred embodiments of a cardboard sheet defect detection device, a cardboard sheet defect removal device, and a cardboard sheet production device according to the present invention will be described in detail. The present invention is not limited by the embodiments, and in a case where there are a plurality of embodiments, the present invention also includes a configuration in which the respective embodiments are combined with each other.

[First Embodiment]

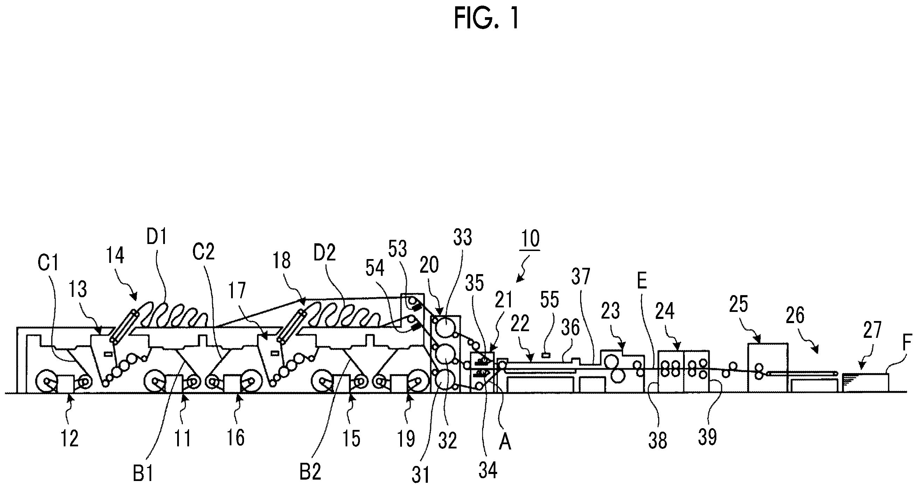

Fig. 1 is a schematic view illustrating a corrugating machine serving as the cardboard sheet production device according to the present embodiment.

In the present embodiment, as illustrated in Fig. 1, a corrugating machine 10 serving as the cardboard sheet production device first bonds a back liner (second liner) C1 to a corrugated core B1 so as to produce a single-faced cardboard sheet D1, and produces a single-faced cardboard sheet D2 by bonding a back liner (second liner) C2 to a corrugated core B2. Next, the back liner C2 of the single-faced cardboard sheet D2 is bonded to the core B1 of the produced single-faced cardboard sheet D1, and a front liner (first liner) A is bonded to the core B2 of the single-faced cardboard sheet D2 so as to produce a continuous double-faced cardboard sheet E. Then, the continuous double-faced cardboard sheet E is cut into a predetermined length, thereby producing a double-faced cardboard sheet F having a plate shape.

The corrugating machine 10 has a mill roll stand 11 of the core B1, a mill roll stand 12 of the back liner C1, a single facer 13, a bridge 14, and a mill roll stand 15 of the core B2, a mill roll stand 16 of the back liner C2, a single facer 17, a bridge 18, a mill roll stand 19 of the front liner A, a preheater 20, a glue machine 21, a double facer 22, a rotary shear 23, a slitter scorer 24, a cutoff 25, a defective product discharge device 26, and a stacker 27.

The respective mill roll stands 11 and 15 have mounted roll sheets around which the cores B1 and B2 respectively formed on both sides are wound in a roll shape, and a splicer for splicing is disposed between the respective roll sheets. When the sheet is fed from one roll sheet, the other sheet is mounted thereon, and the splicing is prepared. If one roll sheet is left a little, the splicer splices the other roll sheet to one roll sheet. Therefore, the roll sheet is continuously fed toward a downstream side from the respective mill roll stands 11 and 15.

In addition, the respective mill roll stands 12 and 16 have mounted roll sheets around which the back liners C1 and C2 respectively formed on both sides are wound in a roll shape, and a splicer for splicing is disposed between the respective roll sheets. When the sheet is fed from one roll sheet, the other sheet is mounted thereon, and the splicing is prepared. If one roll sheet is left a little, the splicer splices the other roll sheet to one roll sheet. Therefore, the roll sheet is continuously fed toward the downstream side from the respective mill roll stands 12 and 16.

The cores B1 and B2 fed from the respective mill roll stands 11 and 15 and the back liners C1 and C2 fed from the mill roll stands 12 and 16 are respectively preheated by preheaters (not illustrated). The respective preheaters have a heating roll into which steam is supplied, and the cores B1 and B2 and the back liners C1 and C2 are transported by being wound around the heating roll, thereby heating all of these up to a predetermined temperature.

The single facer 13 processes the heated core B1 into a corrugated shape, and thereafter, the core B1 is glued to each flute tip. The heated back liner C1 is bonded thereto so as to form the single-faced cardboard sheet D1. The single facer 13 has a pick-up conveyor disposed obliquely upward on the downstream side in the transport direction, and transports the single-faced cardboard sheet D1 formed by the single facer 13 to the bridge 14. The bridge 14 absorbs a speed difference between the single facer 13 and the double facer 22, and can temporarily retain the single-faced cardboard sheet D1.

In addition, the single facer 17 processes the heated core B2 into a corrugated shape, and thereafter, the core B2 is glued to each flute tip. The heated back liner C2 is bonded thereto so as to form the single-faced cardboard sheet D2. The single facer 17 has a pick-up conveyor disposed obliquely upward on the downstream side in the transport direction, and transports the single-faced cardboard sheet D2 formed by the single facer 17 to the bridge 18. The bridge 18 absorbs a speed difference between the single facer 17 and the double facer 22, and can temporarily retain the single-faced cardboard sheet D2.

The mill roll stand 19 has mounted roll sheets around which the front liners A respectively formed on both sides are wound in a roll shape, and a splicer for splicing is disposed between the respective roll sheets. When the sheet is fed from one roll sheet, the other sheet is mounted thereon, and the splicing is prepared. If one roll sheet is left a little, the splicer splices the other roll sheet to one roll sheet. Therefore, the roll sheet is continuously fed toward the downstream side from the mill roll stand 19.

In the preheater 20, three preheat rolls 31, 32, and 33 are arranged parallel to each other in a vertical direction. The preheat roll 31 heats the front liner A, the preheat roll 32 heats the single-faced cardboard sheet D2, and the preheat roll 33 heats the single-faced cardboard sheet D1. The respective preheat rolls 31, 32, and 33 have a winding amount adjustment device (not illustrated), and steam is internally supplied thereto so as to be heated up to a predetermined temperature. The front liner A, the single-faced cardboard sheet D2, and the single-faced cardboard sheet D1 are wound around a peripheral surface thereof. In this manner all of these can be preheated.

In the glue machine 21, glue rolls 34 and 35 are arranged parallel to each other in the vertical direction. The glue roll 34 comes into contact with and glues each flute tip of the core B2 in the single-faced cardboard sheet D2 heated by the preheat roll 32. The glue roll 35 comes into contact with and glues each flute tip of the core B1 in the single-faced cardboard sheet D1 heated by the preheat roll 33. The single-faced cardboard sheets D1 and D2 glued by the glue machine 21 are transferred to the double facer 22 for a subsequent process. In addition, the front liner A heated by the preheat roll 31 is also transferred to the double facer 22 through the inside of the glue machine 21.

The double facer 22 has an upstream-side heating section 36 and a downstream-side cooling section 37 along each traveling line of the respective single-faced cardboard sheets D1 and D2 and the front liner A. The single-faced cardboard sheets D1 and D2 and the front liner A which are glued by the glue machine 21 are carried between a pressing belt and a heating plate in the heating section 36, and are transferred toward the cooling section 37 in a state of overlapping each other. During the transfer, the respective single-faced cardboard sheets D1 and D2 and the front liner A are heated while being pressed. In this manner, all of these are bonded to each other to form a continuous double-faced cardboard sheet E. Thereafter, all of these are naturally cooled while being transported.

The double-faced cardboard sheet E produced by the double facer 22 is transferred to the slitter scorer 24. The slitter scorer 24 cuts the wide double-faced cardboard sheet E along the transport direction so as to have a predetermined width, and processes a ruled line extending in the transport direction. The slitter scorer 24 is configured to include a first slit scorer unit 38 and a second slit scorer unit 39 which have substantially the same structure arrayed along the transport direction of the double-faced cardboard sheet E. The wide double-faced cardboard sheet E is cut by the slitter scorer 24 so as to form the double-faced cardboard sheet E having a predetermined width.

The cutoff 25 cuts the double-faced cardboard sheet E cut in the transport direction by the slitter scorer 24 along the width direction, and forms a plate-shaped double-faced cardboard sheet F having a predetermined length. The defective product discharge device 26 discharges the double-faced cardboard sheet F determined as a defective product by the defect detection device (to be described later) from the transport line. The stacker 27 stacks the double-faced cardboard sheets F determined as quality products one on another, and discharges the double-faced cardboard sheets F as products out of the device.

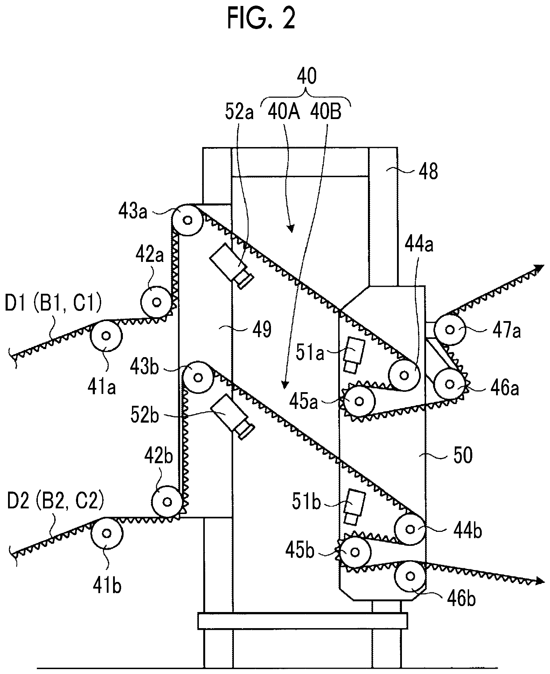

Here, the cardboard sheet defect detection device according to the present embodiment will be described. Fig. 2 is a schematic view of a main part of the single facer on which the cardboard sheet defect detection device according to the present embodiment is mounted.

In the present embodiment, as illustrated in Fig. 2, the cardboard sheet defect detection device 40 is disposed between the bridge 18 and the preheater 20. The cardboard sheet defect detection device 40 is configured to include a first defect detection device 40A that detects the defect of the single-faced cardboard sheet D1 (B1 and C1), and a second defect detection device 40B that detects the defect of the single-faced cardboard sheet D2 (B2 and C2), and both of these have substantially the same configuration as each other. The single-faced cardboard sheet D1 transported from the bridge 18 side is guided by guide rollers 41a, 42a, and 43a to reach the first defect detection device 40A, and is guided and transported to the preheater 20 side by guide rollers 44a, 45a, 46a, and 47a. In addition, the single-faced cardboard sheet D2 transported from the bridge 18 side is guided by guide rollers 41b, 42b, and 43b to reach the second defect detection device 40B, and is guided and transported to the preheater 20 side by guide rollers 44b, 45b, and 46b.

Support plates 49 and 50 are fixed to a frame 48. The guide rollers 43a and 43b are rotatably supported by the support plate 49, and the guide rollers 44a, 44b, 45a, 45b, 46a, 46b, and 47a are rotatably supported by the support plate 50. In addition, imaging devices 52a and 52b (to be described later) are supported by the support plate 49, and irradiation devices 51a and 51b (to be described later) are supported by the support plate 50. Hereinafter, the cardboard sheet defect detection device 40 (40A and 40B) will be described in detail.

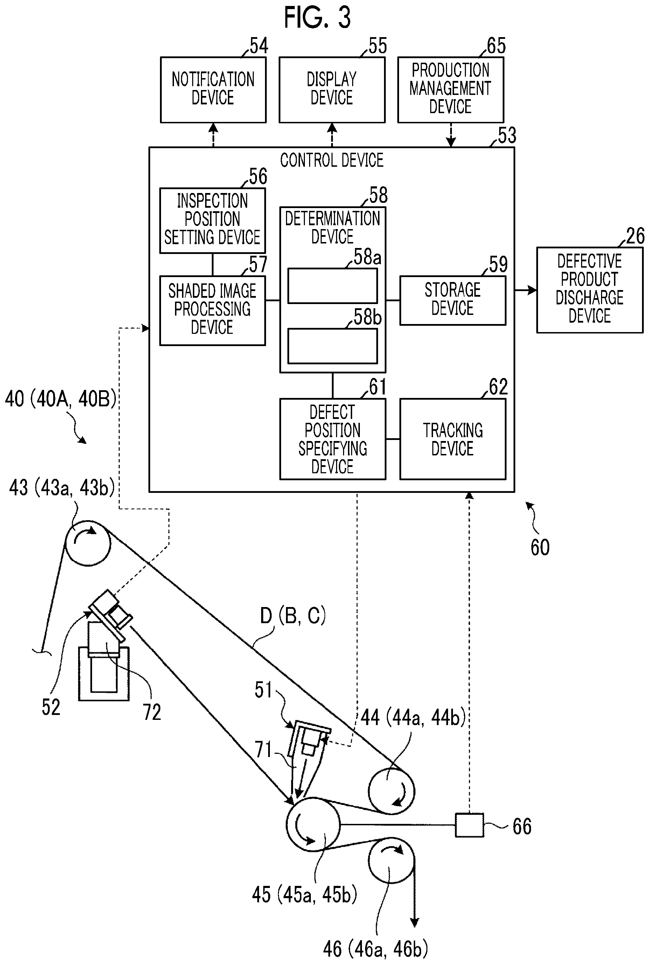

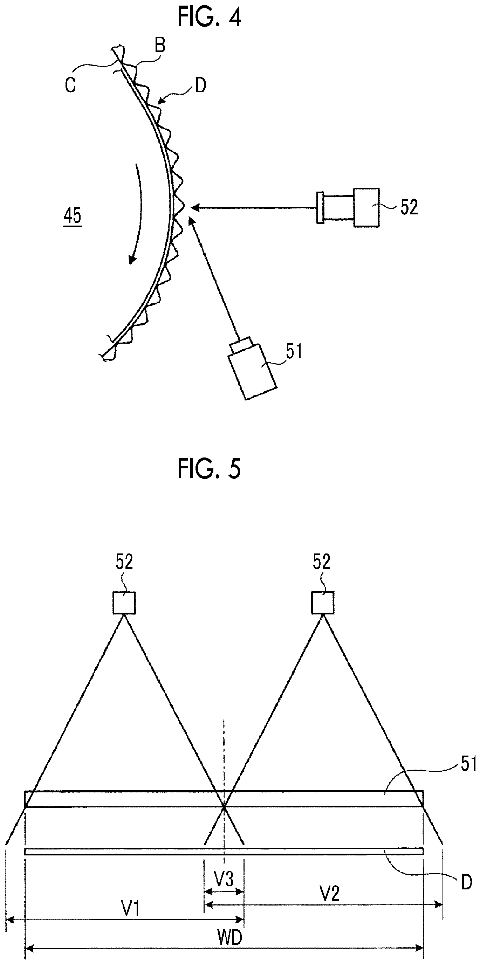

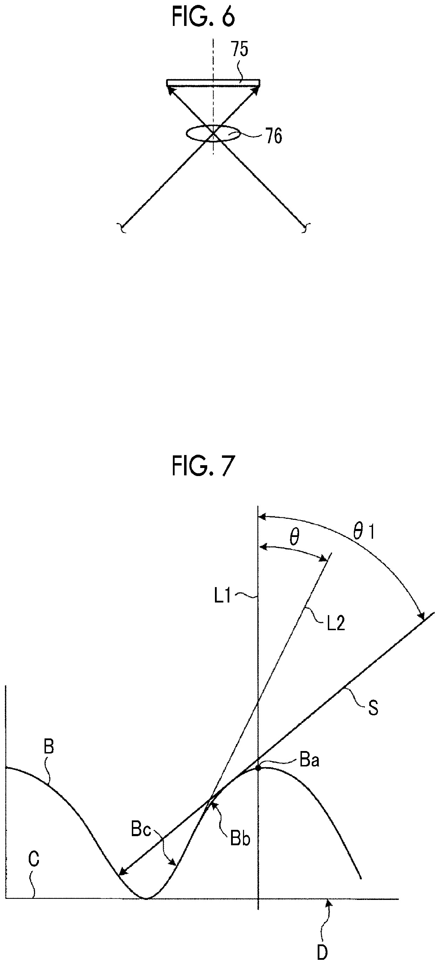

Fig. 3 is a schematic configuration diagram illustrating the cardboard sheet defect detection device according to the present embodiment. Fig. 4 is a side view illustrating a configuration in which the irradiation device and the imaging device are arranged for the single-faced cardboard sheet. Fig. 5 is a plan view illustrating a configuration in which the irradiation device and the imaging device are arranged for the single-faced cardboard sheet. Fig. 6 is a schematic configuration diagram illustrating the imaging device.

As illustrated in Fig. 3, the cardboard sheet defect detection device 40 (40A and 40B) detects the defect of the single-faced cardboard sheet D (D1 and D2) transported by the guide rollers 43, 44, 45, and 46 outside the corrugated core B. In addition to the guide rollers 43, 44, 45, and 46 serving as guide members, the cardboard sheet defect detection device 40 has an irradiation device 51 (51a and 51b), an imaging device 52 (52a and 52b), a control device 53, a notification device 54, and a display device 55. Then, the control device 53 has an inspection position setting device 56, a shaded image processing device 57, a determination device 58, and a storage device 59. In addition, the cardboard sheet defect removal device 60 has the cardboard sheet defect detection device 40 and the defective product discharge device 26. Specifically, the cardboard sheet defect removal device 60 has a defect position specifying device 61 configuring the control device 53, and a tracking device 62. In addition, a production management device 65 to which various pieces of information of the single-faced cardboard sheet D are input is connected to the control device 53. Furthermore, the guide roller 45 has a rotary encoder 66. The control device 53 calculates a transport speed of the single-faced cardboard sheet D, based on a rotational speed of the guide roller 45 which is input from the rotary encoder 66.

Hereinafter, the cardboard sheet defect detection device 40 and the cardboard sheet defect removal device 60 will be described in detail.

The guide rollers 43, 44, 45, and 46 can rotationally drive the other guide roller or can be rotationally driven by the other guide roller, and can guide and transport the single-faced cardboard sheet D in outer peripheral portions thereof. The single-faced cardboard sheet D is formed by bonding the corrugated core B to the back liner C, and the guide roller 43 guides the single-faced cardboard sheet D outside the corrugated core B.

The irradiation device 51 irradiates the core B with parallel light at an irradiation angle inclined as much as a preset predetermined angle with respect to a perpendicular line of the single-faced cardboard sheet D. The imaging device 52 images an irradiated portion (shade) irradiated with the parallel light in the core B. The inspection position setting device 56 sets a plurality of inspection positions in the width direction of the single-faced cardboard sheet D, based on width information of the single-faced cardboard sheet D. The shaded image processing device 57 defines the bright section and the dark section along the transport direction of the single-faced cardboard sheet D, based on the captured image captured by the imaging device 52. The determination device 58 compares a length of the bright section and a length of the dark section which are defined by the shaded image processing device 57 with a preset determination value (shape determination value), and determines the quality of the single-faced cardboard sheet D. The storage device 59 stores the determination value used by the determination device 58. In addition, the notification device 54 notifies an operator of a determination result of the determination device 58, and the display device 55 displays the determination result of the determination device 58.

In addition, the defect position specifying device 61 specifies a defect position in the single-faced cardboard sheet D which is detected by the cardboard sheet defect detection device 40. The tracking device 62 tracks the defect position in the single-faced cardboard sheet D which is specified by the defect position specifying device 61. The control device 53 operates the defective product discharge device 26, based on a tracking result of the tracking device 62.

As illustrated in Figs. 3 to 5, the irradiation device 51 is located at a position away from the guide roller 45 as much as a predetermined distance, and is fixed to a device main body (support plate 50) by a mounting bracket 71. In addition, the irradiation device 51 is located to face a peripheral surface of the guide roller 45 so as to correspond to the length of the guide roller 45 in the axial direction. An outer peripheral surface of the guide roller 45, that is, a whole width region of the single-faced cardboard sheet D guided by the guide roller 45 can be irradiated with the parallel light. Particularly in a case where the guide roller 45 is viewed in the axial direction, the parallel light travels straight in parallel with each other so that an axis of the light emitted for irradiating the guide roller 45 does not radially spread.

The imaging device 52 is located at a position away from the guide roller 45 as much as a predetermined distance, and is fixed to a device main body (support plate 49) by a mounting bracket 72. In addition, a plurality (two in the present embodiment) of the imaging devices 52 are provided at a predetermined interval in the axial direction of the guide roller 45. One imaging device 52 is located to face the guide roller 45 on one side at an intermediate position in the axial direction of the guide roller 45, and the other imaging device 52 is located to face the guide roller 45 on the other side at the intermediate position in the axial direction of the guide roller 45. That is, visual fields V1 and V2 are set for the respective imaging devices 52, and an overlapping region V3 of the visual fields V1 and V2 is set at an intermediate position in the width direction of the single-faced cardboard sheet D. The visual fields V1 and V2 are set beyond each end portion in the width direction of the single-faced cardboard sheet D. Therefore, in the respective imaging devices 52, the visual fields V1 and V2 are set beyond a width WD of the single-faced cardboard sheet D. Accordingly, it is possible to image the whole width region of the single-faced cardboard sheet D guided by the guide roller 45.

The respective imaging devices 52 are line cameras, and image the irradiated portion of the tip in the corrugated core B. In this case, the imaging device 52 can capture an image having a plurality of pixels along the transport direction and the width direction of the single-faced cardboard sheet D. That is, the respective imaging devices 52 acquires an image at one time in a region having a predetermined length in the single-faced cardboard sheet D and an entire region in the width direction. Therefore, in the imaging device 52, an imaging interval is set in accordance with the transport speed of the single-faced cardboard sheet D or a pitch of the tips of the core B. In this case, as illustrated in Fig. 6, the line camera serving as the respective imaging devices 52 is configured to mainly include an imaging sensor element (CCD imaging sensor element or CMOS imaging element) 75, a lens 76, and a control circuit (not illustrated). Incident light from the single-faced cardboard sheet D is input to the imaging sensor element 75 through the lens 76 so as to form an image, and the control circuit converts the amount of light in forming the image into a video signal so as to output the video signal.

In the present embodiment, the imaging device (line camera) 52 is located on a perpendicular line of the single-faced cardboard sheet D, that is, a line extending along a radial direction passing through the center of the guide roller 43. However, the irradiation device 51 is located on a line of an angle (irradiation angle) inclined as much as a predetermined angle with respect to the perpendicular line (line extending along the radial direction passing through the center of the guide roller 43) of the single-faced cardboard sheet D.

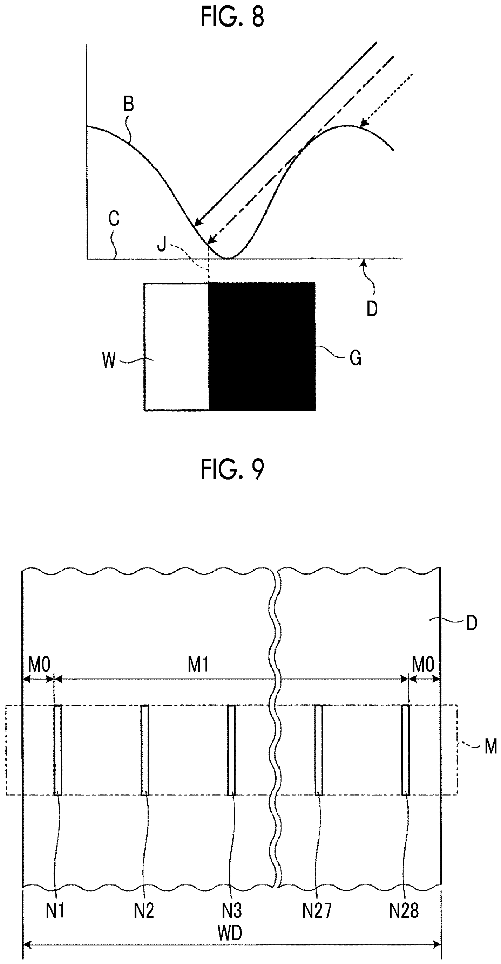

FIG. 7 is a schematic view for describing the irradiation angle of the irradiation device with respect to the core of the single-faced cardboard sheet. Fig. 8 is a schematic view illustrating an action of illumination light with respect to the core of the single-faced cardboard sheet. Fig. 9 is a schematic view illustrating a detection position used by the cardboard sheet defect detection device.

As illustrated in Fig. 7, in the single-faced cardboard sheet D, the corrugated core B is bonded to the back liner C. The back liner C comes into contact with the guide roller 43, and the core B is exposed outward and transported. The single-faced cardboard sheet D travels in an arc shape while being supported by the guide roller 45. Here, description will be made on the assumption that the single-faced cardboard sheet D linearly travel. A perpendicular line L1 of the single-faced cardboard sheet D along the radial direction passing through the center of the guide roller 45 and an apex portion Ba of the tip of the core B is defined. An irradiation angle θ1 of parallel light S emitted for irradiation by the irradiation device 51 represents an angle with respect to the perpendicular line L1, and is set to the angle θ1 which is larger than an angle θ formed from the perpendicular line L1 to an inclined line L2 along an inclined surface of the tip of the core B. The tip of the core B includes a first curve portion Bb having a shape protruding outward of an apex portion Ba to a foot portion and a second curve portion Bc having a shape recessed outward, and an inclined line L2 is a tangential line with respect to a position on the most foot side in the first curve portion Bb. The irradiation angle θ1 of the parallel light S emitted for irradiation by the irradiation device 51 is set to the angle θ1 which is larger than the angle θ formed from the perpendicular line L1 to the inclined line L2. Accordingly, the irradiation light can generate the shade of the tip.

Then, the irradiation device 51 irradiates the core B with the parallel light at the predetermined irradiation angle θ1. In a case where the irradiation light from the irradiation device 51 is not the parallel light, the bright section W and the dark section G are formed. However, each light in a different irradiation direction comes into contact with the inclined surface. Consequently, each light in the different irradiation direction generates a boundary between bright section W and the dark section G, thereby causing the boundary to be blurred. On the other hand, as illustrated in Fig. 8, in a case where the irradiation light from the irradiation device 51 is the parallel light, the irradiation light forms the shade of the tip of the core B. Accordingly, the bright section W and the dark section G are formed. Here, since the irradiation light is the parallel light, a boundary line J is clearly formed between the bright section W and the dark section G, and thus, the length of the bright section W and the length of the dark section G can be highly accurately defined.

As illustrated in Fig. 3, the inspection position setting device 56 sets the plurality of inspection positions in the width direction of the single-faced cardboard sheet D, based on a width dimension of the single-faced cardboard sheet D which is input from the production management device 65. As illustrated in Fig. 9, the imaging device 52 acquires an image M in the entire region in the width direction over a predetermined length with respect to the single-faced cardboard sheet D. The inspection position setting device 56 sets a plurality of inspection positions N1, N2, N3 ..., N27, and N28 with respect to a width WD of the single-faced cardboard sheet D. In this case, the inspection position setting device 56 sets non-inspection regions M0 in each end portion in the width direction in the single-faced cardboard sheet D, sets an inspection region M1 between the non-inspection regions M0 of the respective end portions, and sets the plurality of inspection positions N1, N2, N3 ..., N27, and N28 in the inspection region M1 at every predetermined interval. That is, in the present embodiment, the quality is not determined over the entire region in the width direction of the single-faced cardboard sheet D. The quality is determined at a plurality of positions in the width direction of the single-faced cardboard sheet D. It is desirable that the length in the width direction of the non-inspection region M0 is set to the length shorter than the interval of the inspection positions N1, N2, N3 ... N27, and N28.

The single-faced cardboard sheet D may meander so as to be shifted in the width direction when transported. Accordingly, the non-inspection region M0 is set in each end portion of the width direction in accordance with the meandering amount of the single-faced cardboard sheet D. The length in the width direction of the non-inspection region M0 is set in accordance with the configuration of the corrugating machine 10 itself or transport accuracy. Then, the plurality of inspection positions N1, N2, N3 ..., N27, and N28 are set in the inspection region M1 at an equal interval in the width direction. The present embodiment is not limited to the configuration in which the plurality of inspection positions N1, N2, N3 ..., N27, and N28 are set in the width direction at the equal interval. For example, the defect of the single-faced cardboard sheet D is likely to occur on the end portion side in the width direction. Accordingly, the interval may be set to be narrowed (setting density may be increased) for the plurality of inspection positions N1, N2, N3 ..., N27, and N28 on each end portion side in the width direction of the single-faced cardboard sheet D. The interval may be set to be widened (setting density may be decreased) for the plurality of inspection positions N1, N2, N3 ..., N27, and N28 on the center side in the width direction of the single-faced cardboard sheet D. In addition, instead of the end portion side in the width direction in the single-faced cardboard sheet D, the interval may be narrowed (setting density may be increased) for the respective inspection positions N1, N2, N3 ..., N27, and N28 in the region where the defect is likely to occur.

As illustrated in Fig. 3, the shaded image processing device 57 defines the bright section W and the dark section G, based on the shade of each tip of the core B from the captured image of the imaging device 52. In this case, the imaging device (line camera) 52 images the shade of one tip in the corrugated core B as one pixel along the transport direction of the single-faced cardboard sheet D, and acquires the image as the image having the plurality of pixels along the width direction of the single-faced cardboard sheet D. Therefore, the shaded image processing device 57 combines a plurality of images having 1-pixel × the plurality of pixels along the transport direction of the single-faced cardboard sheet D with each other so as to define a plurality of continuous bright sections W and dark sections G in a predetermined length of the single-faced cardboard sheet D.

In addition, the inspection position setting device 56 sets the plurality of inspection positions in the width direction of the single-faced cardboard sheet D. The shaded image processing device 57 defines the bright section W and the dark section G by adding each imaging data of the bright section W and the dark section G at the respective inspection positions N1, N2, N3 ..., N27, and N28 in the width direction of the single-faced cardboard sheet D, in the image of the bright section W and the dark section G as much as a predetermined length of the single-faced cardboard sheet D.

The determination device 58 determines the quality of the single-faced cardboard sheet D by comparing the length of the bright section W and the length of the dark section G which are defined by the shaded image processing device 57 with the determination value. In this case, the determination device 58 calculates a flute ratio by dividing the length of the dark section G by the length of the bright section W, and compares the flute ratio with the determination value so as to determine the quality. The flute ratio may be calculated by dividing the length of the bright section W by the length of the dark section G. Alternatively, the flute ratio may be calculated by dividing the length of the dark section G or the length of the bright section W by the total length. That is, when the single-faced cardboard sheet D is transported, the bright section W and the dark section G are defined alternately and continuously. The determination device 58 determines the quality so as to continuously perform the quality determination on the bright section W and the quality determination on the dark section G.

Then, for the single-faced cardboard sheet D, a standard value of the shape (design value of a flute height or a pitch) is set in accordance with specifications (size or flute type) of the double-faced cardboard sheet F to be produced. When the irradiation angle θ1 of the parallel light S in the irradiation device 51 is set to a predetermined angle, a determination reference value is set in advance through an experiment in accordance with the shape of the tip of the core B in the single-faced cardboard sheet D which is set to the standard value. The determination reference value may be used as the determination value. However, in view of a production error or a detection error, it is desirable to set a determination reference range of the double-faced cardboard sheet F which is determined as the quality product. Therefore, in the present embodiment, a determination region is set by adding a predetermined margin to the determination reference value. That is, if a ratio between the length of the bright section W and the length of the dark section G (flute ratio) which are obtained by the processing of the shaded image processing device 57 falls within the determination region, the single-faced cardboard sheet D is determined as the quality product. If the ratio does not fall within the determination region, the single-faced cardboard sheet D is determined as the defective product. In addition, the determination value (determination region) is set for each type of the single-faced cardboard sheet D (type of the core B), and is stored in the storage device 59. In the single-faced cardboard sheet D, particularly in a case where the shapes (heights or pitches) of the core B are different from each other, the shapes of the shade are different from each other. Accordingly, the length of the bright section W and the length of the dark section G are different from each other. Therefore, a plurality of determination values (determination regions) are set in accordance with the shapes of the core B.

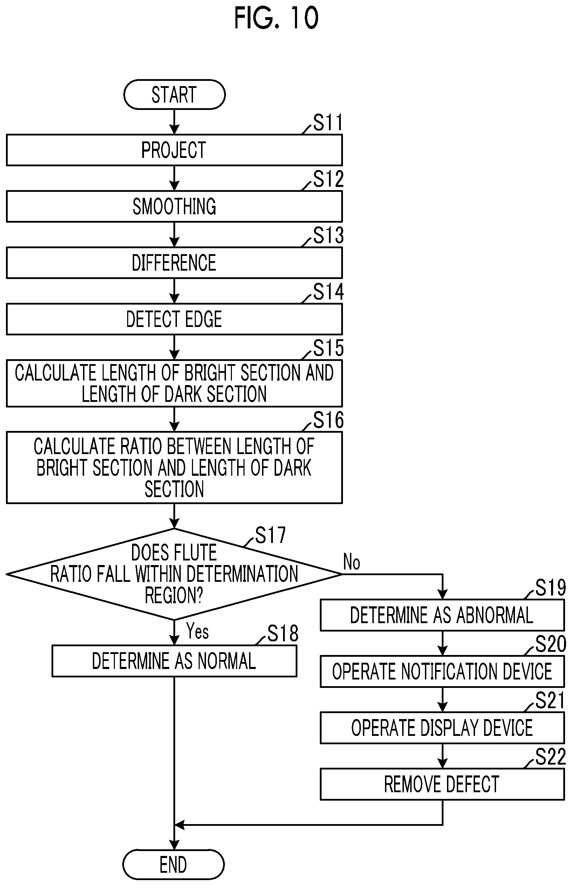

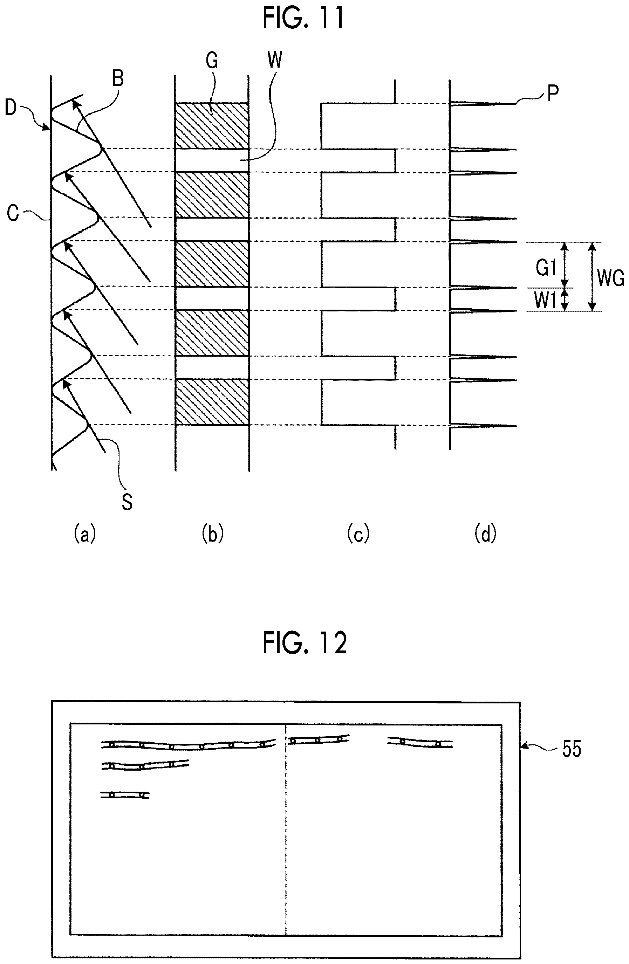

Here, processes of the shaded image processing device 57 and the determination device 58 will be described in detail. Fig. 10 is a flowchart for describing an image processing method. Fig. 11 is a view for describing the image processing method. Fig. 12 is a schematic view illustrating a defect image of the cardboard sheet displayed on the display device.

As illustrated in Fig. 10, in Step S11, the acquired shaded image of the core B is projected. That is, as illustrated in Figs. 11(a), 11(b), and 11(c), in the shaded image in which the images having one pixel × a plurality of pixels are captured multiple times and arranged parallel to each other in the transport direction, the image data of the bright section W and the dark section G is added in the width direction of the single-faced cardboard sheet D so as to calculate added luminance. Referring back to Fig. 10, in Step S12, noise is removed by smoothing the added luminance in the transport direction. In Step S13, as illustrated in Fig. 11(d), a difference in the added luminance of the adjacent pixels in the transport direction is obtained, that is, the difference is determined. Referring back to Fig. 10, in Step S14, a difference value increases in an edge of the bright section W and the dark section G. Accordingly, a peak value P where the difference value increases is extracted. In Step S15, a length W1 of the bright section W and a length G1 of the dark section G are calculated.

Then, in Step S16, a ratio (flute ratio) between the length W1 of the bright section W and the length G1 of the dark section G is calculated as follows.

$$\text{Flute Ratio} = \text{Length G1 of Dark Section G} \ / \ \text{Length W1 of Bright Section W}$$

In Step S17, the ratio between the length W1 of the bright section W and the length G1 of the dark section G, that is, the flute ratio and the determination region are compared with each other so as to determine whether or not the flute ratio falls within the determination region.

In Step S17, if it is determined that the flute ratio falls within the determination region (Yes), it is determined as the quality product, and the process proceeds to Step S18. Here, it is determined as normal since one tip of the core B is the quality product. On the other hand, in Step S17, if it is determined that the flute ratio does not fall within the determination region (No), it is determined as the defective product, and the process proceeds to Step S19. Then, in Step S19, it is determined as abnormal since one tip of the core B is the defective product. In Step S20, the notification device 54 issues an alarm (lamp or alarm sound). In Step S21, the display device 55 displays an image of the defective product on the display.

In this case, as illustrated in Fig. 12, the display device 55 displays the image of the single-faced cardboard sheet D imaged by the imaging device 52, and displays the image by putting a circle at a position of the tip of the core B which is determined as the defect. Then, the storage device 59 stores the image of the core B determined as the defect. In many cases, the single-faced cardboard sheet D in which the tip of the core B is determined as the defective product may have a bonding defect due to lack of heat. In this case, the single-faced cardboard sheet D may be controlled so that the transport speed is lowered. Then, in Step S22, the double-faced cardboard sheet F having the defect including the defective tip is discharged outward of the transport line.

That is, as illustrated in Fig. 3, if a defective site appears at a predetermined position of the core B in the single-faced cardboard sheet D, the position where the defective site appears is tracked, and the double-faced cardboard sheet F including the defective site is removed. The defect position specifying device 61 calculates a transported distance of the single-faced cardboard sheet D (double-faced cardboard sheets E and F) from an imaging moment (time) of the tip of the core B imaged by the imaging device 52 to a defect determination moment (time) determined by the determination device 58, and specifies a defect position of the tip of the tip of the core B, based on the transport distance of the cardboard sheet. The tracking device 62 tracks the defect position of the tip of the core B moving with the lapse of time, and estimates a moment (time) at which the cut double-faced cardboard sheet F including the defect position reaches the defective product discharge device 26. Based on a tracking result of the tracking device 62, when the double-faced cardboard sheet F including the defect position reaches the defective product discharge device 26, the control device 53 operates the defective product discharge device 26.

In this case, since the defective product discharge device 26 is operated, the double-faced cardboard sheet F as the defective product discharged from the transport line is fed to a shredder by a transport device (not illustrated) so as to be cut. The double-faced cardboard sheet F as the defective product discharged from the transport line includes not only a flute defect of the core B, but also a bonding defect or a sheet splice portion. Therefore, a switching device may be provided in the transport device, and only the double-faced cardboard sheet F determined as the flute defect in the core B may be stored without being sent to the shredder by the transport device. That is, later, the operator can visibly recognize the double-faced cardboard sheet F determined as the flute defect of the core B.

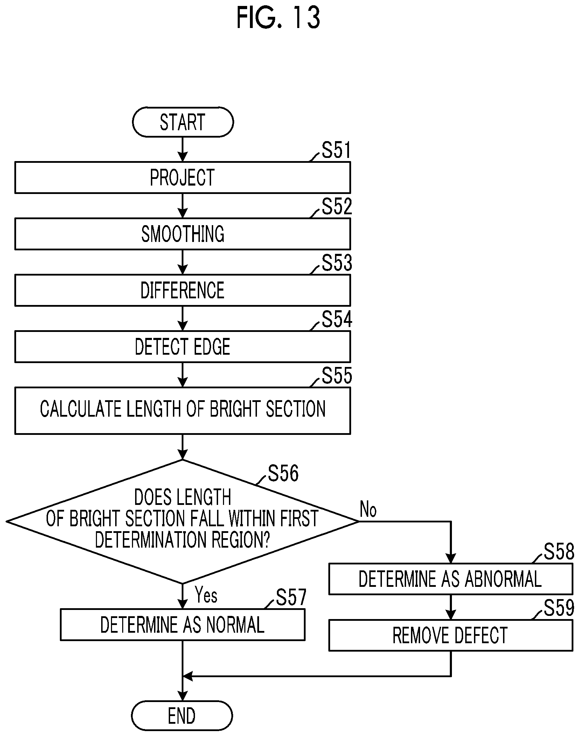

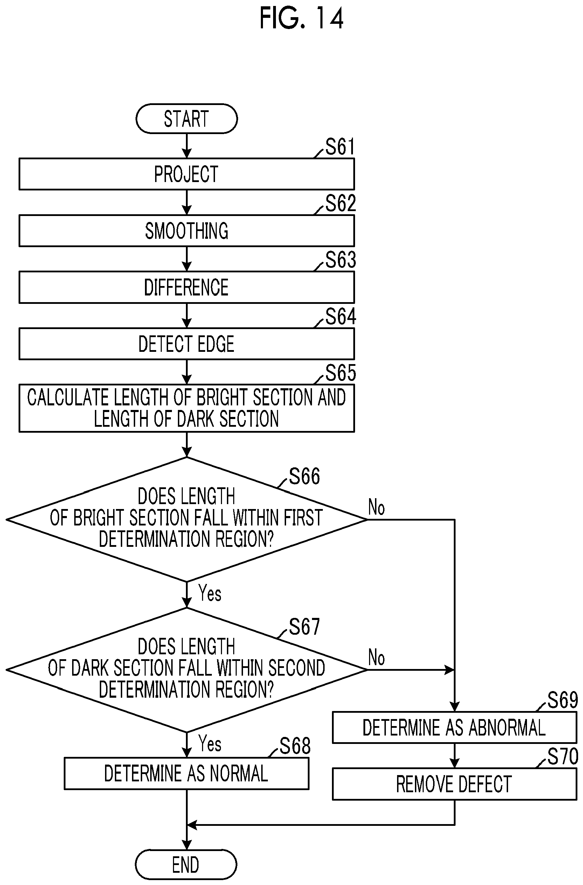

In the embodiment described above, a configuration has been adopted as follows. The determination device 58 compares the ratio (flute ratio) between the length of the dark section G and the length of the bright section W with the determination value (determination region) so as to determine the quality of the single-faced cardboard sheet D. However, the embodiment is not limited to this configuration. Fig. 13 is a flowchart for describing a first modification example of the image processing method. Fig. 14 is a flowchart for describing a second modification example of the image processing method.

In the first modification example, as illustrated in Fig. 13, the acquired shaded image of the core B is projected in Step S51. In Step S52, noise is removed by smoothing the added luminance in the transport direction. In Step S53, a difference in the added luminance of the adjacent pixels in the transport direction is obtained, that is, the difference is determined. In Step S54, a difference value increases in an edge of the bright section W and the dark section G. Accordingly, the peak value P where the difference value increases is extracted. In Step S55, the length W1 (or the length G1 of the dark section G) of the bright section W is calculated.

In Step S56, the length W1 of the bright section W is compared with a bright section determination region (or a length G2 of the dark section G is compared with a dark section determination region), and it is determined whether or not the length W1 of the bright section W falls within the bright section determination region. Here, if the length W1 of the bright section W is determined as normal since the length W1 falls within the bright section determination region, it is determined as the quality product, and the process proceeds to Step S57. Here, one tip of the core B is determined as the quality product. On the other hand, in Step S56, if it is determined that the length W1 of the bright section W does not fall within the bright section determination region, it is determined as the defective product, and the process proceeds to Step S58. Then, in Step S58, it is determined as abnormal since one tip of the core B is the defective product. In Step S59, the double-faced cardboard sheet F having the defect including the defective tip is discharged outward of the transport line.

In addition, in the second modification example, as illustrated in Fig. 14, the acquired shaded image of the core B is projected in Step S61. In Step S62, noise is removed by smoothing the added luminance in the transport direction.

In Step S63, a difference in the added luminance of the adjacent pixels in the transport direction is obtained, that is, the difference is determined. In Step S64, a difference value increases in an edge of the bright section W and the dark section G. Accordingly, the peak value P where the difference value increases is extracted. In Step S65, the length W1 of the bright section W and the length G1 of the dark section G are calculated.

In Step S66, the length W1 of the bright section W is compared with the bright section determination region, and it is determined whether or not the length W1 of the bright section W falls within the bright section determination region. Here, if the length W1 of the bright section W is determined as normal since the length W1 falls within the bright section determination region, it is determined as the quality product, and the process proceeds to Step S67. In Step S67, the length G2 of the dark section G is compared with the dark section determination region, and it is determined whether or not the length G1 of the dark section G falls within the dark section determination region. Here, if it is determined that the length G1 of the dark section G falls within the dark section determination region, it is determined as the quality product, and the process proceeds to Step S68. Here, one tip of the core B is determined as the quality product. On the other hand, in Step S66, if it is determined as abnormal since the length W1 of the bright section W does not fall within the bright section determination region, it is determined as the defective product, and the process proceeds to Step S69. In addition, in Step S67, it is determined that the length G1 of the dark section G does not fall within the dark section determination region, it is determined as the defective product, and the process proceeds to Step S69. Then, in Step S69, it is determined that one tip of the core B is the defective product. In Step S70, the double-faced cardboard sheet F having the defect including the defective tip is discharged outward of the transport line.

As in the first modification example or the second modification example, the length W1 of the bright section W is compared with the bright section determination region, or the length G1 of the dark section G is compared with the dark section determination region. In this manner, it is not necessary to calculate the flute ratio, and the determination process performed by the determination device 58 is facilitated.

Incidentally, the cardboard sheet defect detection device 40 according to the present embodiment determines the quality of single-faced cardboard sheet D by causing the determination device 58 to compare the flute ratio of the core B in the single-faced cardboard sheet D with the determination value (determination region). In the present embodiment, as an inspection mode for inspecting the single-faced cardboard sheet D, a normal inspection mode and a highly accurate inspection mode can be selectively switched therebetween.

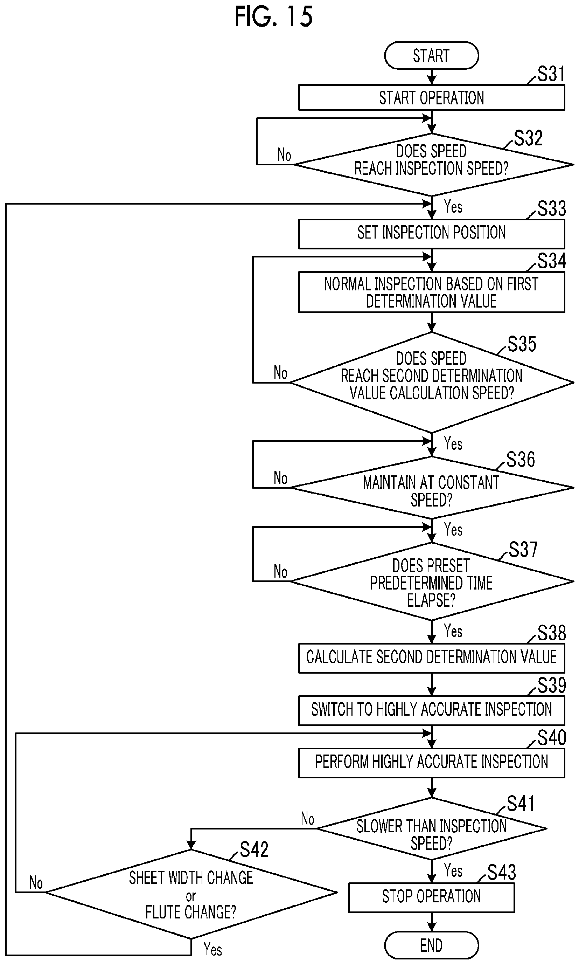

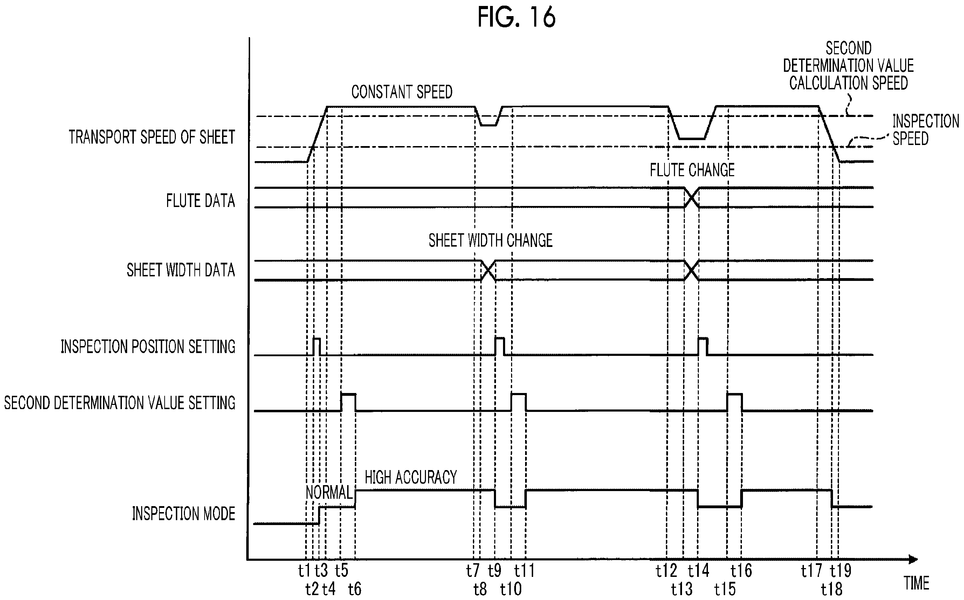

Fig. 15 is a flowchart for describing an operation of the cardboard sheet defect detection device. Fig. 16 is a time chart for describing an operation of the cardboard sheet defect detection device.

As illustrated in Fig. 3, the determination device 58 determines the quality of the single-faced cardboard sheet D by comparing the captured image captured by the imaging device 52 with the shape determination value of the core B. The shape determination value of the core B is configured to include a first determination value for the normal inspection mode and a second determination value for the highly accurate inspection mode. The determination device 58 has a first determination value setting unit 58a that sets the first determination value, and a second determination value setting unit 58b that sets the second determination value. The first determination value is a constant value to be set in advance, and the second determination value is an individual value to be set based on the captured image captured by the imaging device 52 after the quality starts to be determined using the first determination value. The determination device 58 can switch between the first determination value and the second determination value.

That is, the determination device 58 determines the quality of the single-faced cardboard sheet D by comparing the flute ratio and the shape determination value with each other at the plurality of inspection positions N1, N2, N3 ..., N27, and N28 in the width direction of the single-faced cardboard sheet D set by the inspection position setting device 56. In this case, the first determination value is set based on a determination reference value of a tip shape of the core B in the single-faced cardboard sheet D before the corrugating machine 10 starts operation, and is set as the constant value at all of the respective inspection positions N1, N2, N3 ..., N27, and N28. On the other hand, the second determination value is set based on the flute ratio of the single-faced cardboard sheet D in which the quality product is determined using the first determination value by the determination device 58, and is set as the individual value for each of the respective inspection positions N1, N2, N3 ..., N27, and N28.

Specifically, the first determination value setting unit 58a sets the first determination value by adding and subtracting preset margin values a and b to and from the determination reference value. That is, the first determination value setting unit 58a sets a first upper limit value by adding the margin value a to the determination reference value, and sets a first lower limit value by subtracting the margin value b from the determination reference value. Therefore, in the normal inspection using the first determination value, which is performed by the determination device 58, the single-faced cardboard sheet D is determined as the quality product, when the detected flute ratio falls within the determination region between the first upper limit value and the first lower limit value at the respective inspection positions N1, N2, N3 ..., N27, and N28 of the single-faced cardboard sheet D. On the other hand, the second determination value setting unit 58b uses the flute ratio of the single-faced cardboard sheet D in which the quality product is determined using the first determination value by the determination device 58, and sets the second determination value by adding and subtracting the preset margin values $\alpha$ and $\beta$ to and from the average value of the plurality of data items (flute ratio) at the respective inspection position N1, N2, N3 ..., N27, and N28. That is, the second determination value setting unit 58b sets a second upper limit value by adding the margin value $\alpha$ to the average value of the plurality of data items (flute ratio), and sets a second lower limit value by subtracting the margin value $\beta$ from the average value of the plurality of data items (flute ratio). Therefore, in the highly accurate inspection using the second determination value, which is performed by the determination device 58, the single-faced cardboard sheet D is determined as the quality product, when the detected flute ratio falls within the determination region between the second upper limit value and the second lower limit value at the respective inspection positions N1, N2, N3 ..., N27, and N28 of the single-faced cardboard sheet D.

A setting method of the second determination value is not limited to the above-described method. For example, the second determination value setting unit 58b may use the flute ratio of the single-faced cardboard sheet D in which the quality product is determined using the first determination value by the determination device 58, and may set the second determination value by adding and subtracting preset margin values $\alpha$1 and $\beta$2 to and from the maximum value and the minimum value of the plurality of data items (flute ratio) at the respective inspection positions N1, N2, N3 ..., N27, and N28. That is, the second upper limit value is set by adding the margin value $\alpha$1 to the maximum value of the plurality of data items (flute ratio), and the second lower limit value is set by subtracting the margin value $\beta$1 from the minimum value of the plurality of data items (flute ratio).

In addition, for example, the second determination value setting unit 58b may use the flute ratio of the single-faced cardboard sheet D in which the quality product is determined using the first determination value by the determination device 58, and may set a standard deviation as the margin value by calculating the standard deviation of the plurality of data items (flute ratio) at the respective inspection positions N1, N2, N3 ..., N27, and N28. That is, the second upper limit value and the second lower limit value are set by adding the standard deviation as the margin value to the average value of the plurality of data items (flute ratio). The standard deviation may be multiplied by a correction factor (for example, a natural number such as 1, 2, 3 ...) so as to define the determination region.

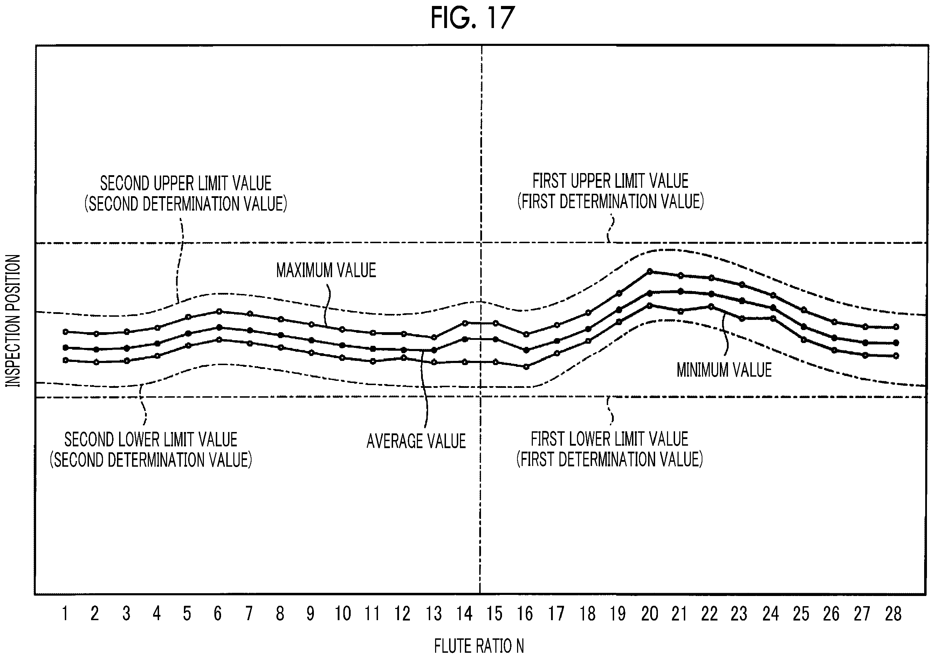

Fig. 17 is a graph illustrating a relationship among the average value, the maximum value, the minimum value, and the determination value of the flute ratio with respect to the plurality of inspection positions.

As illustrated in Fig. 17, at the plurality of inspection positions N1, N2, N3 ..., N27, and N28 in the width direction of the single-faced cardboard sheet D, the average value of inspection results (flute ratios) at a predetermined length in the transport direction of the single-faced cardboard sheet D varies up and down in the width direction of the single-faced cardboard sheet D. The average value of the flute ratios represents data of the single-faced cardboard sheet D determined as the quality product, and has to be a constant value. However, due to a convergence difference or distortion of the lens 76 in the imaging device 52 or a passing position of the light with respect to the lens 76, the average value varies.

Therefore, in the highly accurate inspection mode according to the present embodiment described above, the determination device 58 determines the quality of the single-faced cardboard sheet D by using the first determination value, and sets the second determination value, based on inspection data (flute ratio) of the single-faced cardboard sheet D determined as the quality product. The first upper limit value serving as the first determination value is set by adding the margin value a to the determination reference value, and the first lower limit value is set by subtracting the margin value b from the determination reference value. Therefore, the first upper limit value and the first lower limit value are constant values regardless of the respective inspection positions N1, N2, N3 ..., N27, and N28. Here, the design value represents the specifications (size or flute type) of the double-faced cardboard sheet F to be produced.

On the other hand, the second upper limit value serving as the second determination value is set by adding the margin value $\alpha$ to the average value of the plurality of flute ratios at the respective inspection positions N1, N2, N3 ..., N27, and N28, and the second lower limit value is set by subtracting the margin value $\beta$ from the average value of the plurality of flute ratios at the respective inspection position N1, N2, N3 ..., N27, and N28. Therefore, the second upper limit value and the second lower limit value are the individual values which are different from each other at the respective inspection positions N1, N2, N3 ..., N27, and N28. In addition, even in a case where the second upper limit value is set by adding the margin value $\alpha$1 to the maximum value of the plurality of flute ratios at the respective inspection positions N1, N2, N3 ..., N27, and N28 and the second lower limit value is set by subtracting the margin value $\beta$1 from the minimum value of the plurality of flute ratios at the respective inspection positions N1, N2, N3 ..., N27, and N28, the second upper limit value and the second lower limit value are the individual values which are different from each other at the respective inspection positions N1, N2, N3 ..., N27, and N28.

In addition, as illustrated in Fig. 3, the second determination value setting unit 58b of the determination device 58 sets the second determination value when the transport speed of the single-faced cardboard sheet D reaches a preset second determination value setting speed, and after a preset predetermined time elapses from when the transport speed is maintained at a constant speed.

In addition, when the width of the double-faced cardboard sheet F to be produced is changed, the corrugating machine 10 performs splicing on the back liner C (C1 and C2), the core B (B1 and B2), and the front liner A (A1 and A2) which are to be used. In this manner, the corrugating machine 10 continuously produces the double-faced cardboard sheet F. In addition, the corrugating machine 10 continuously produces the double-faced cardboard sheet F by replacing and switching corrugating rolls to be used, when the flute height of the double-faced cardboard sheet F is changed. In this way, when the type of the double-faced cardboard sheet F is changed, the determination device 58 switches the highly accurate inspection using the second determination value to the normal inspection using the first determination value, and sets the second determination value as described above during the normal inspection using the first determination value. In this case, the second determination value is switched to the first determination value by the determination device 58, when the sheet splice portion of the single-faced cardboard sheet D (D1 and D2) passes the imaging position imaged by the imaging device 52.

Here, an operation of the cardboard sheet defect detection device will be described in detail. First, processes of the control device 53 of the cardboard sheet defect detection device 40 will be described.

As illustrated in Figs. 3 and 15, in Step S31, if the corrugating machine 10 starts to be operated, the back liner C (C1 and C2), the core B (B1 and B2), the front liner A (A1 and A2) start to be transported, and the single-faced cardboard sheet D (D1 and D2) and the double-faced cardboard sheets E and F start to be produced. In Step S32, in the cardboard sheet defect detection device 40, it is determined whether or not the transport speed of the single-faced cardboard sheet D reaches the preset inspection speed. The control device 53 calculates the transport speed of the single-faced cardboard sheet D, based on the rotational speed of the guide roller 45 which is input from the rotary encoder 66. Here, if it is determined that the transport speed of the single-faced cardboard sheet D does not reach the inspection speed (No), this process is repeatedly performed.

On the other hand, if it is determined that the transport speed of the single-faced cardboard sheet D reaches the inspection speed (Yes), the inspection positions in the width direction in the single-faced cardboard sheet D are set in Step S33. That is, based on the width dimension of the single-faced cardboard sheet D which is input from the production management device 65, the inspection position setting device 56 sets non-inspection regions M0 in respective end portions in the width direction in the single-faced cardboard sheet D, and sets the plurality of inspection positions N1, N2, N3 ..., N27, and N28 in an inspection region M1 between the non-inspection regions M0 of the respective end portions (refer to Fig. 9).

If the plurality of inspection positions N1, N2, N3 ..., N27, and N28 are set in the single-faced cardboard sheet D, in Step S34, in Step S34, the determination device 58 performs the normal inspection of the single-faced cardboard sheet D, based on the first determination value set in advance by the first determination value setting unit 58a. If the normal inspection of the single-faced cardboard sheet D starts, the inspection data is stored in the storage device 59. In Step S35, it is determined whether or not the transport speed of the single-faced cardboard sheet D reaches a second determination value calculation speed. Here, if it is determined that the transport speed of the single-faced cardboard sheet D does not reach the second determination value calculation speed (No), the normal inspection in Step S34 is continuously performed.

On the other hand, if it is determined that the transport speed of the single-faced cardboard sheet D reaches the second determination value calculation speed (Yes), it is determined in Step S36 whether or not the transport speed of the single-faced cardboard sheet D is maintained at the constant speed. Here, if it is determined that the transport speed of the single-faced cardboard sheet D is not maintained at the constant speed (No), this process is repeatedly performed. On the other hand, if it is determined that the transport speed of the single-faced cardboard sheet D is maintained at the constant speed (Yes), it is determined in Step S37 whether or not a preset predetermined time elapses after the transport speed of the single-faced cardboard sheet D is maintained at the constant speed. Here, if it is determined that the predetermined time does not elapse (No), this process is repeatedly performed. On the other hand, if it is determined that the predetermined time elapses (Yes), the second determination value is set in Step S38. For example, the second determination value setting unit 58b uses the flute ratio of the single-faced cardboard sheet D determined as the quality product during the normal inspection, and sets the second determination value (second upper limit value and second lower limit value) by adding and subtracting the margin values $\alpha$ and $\beta$ to and from the average value of the plurality of data items (flute ratios) at the respective inspection positions N1, N2, N3 ..., N27, and N28. If the second determination value is set, in Step S39, the determination device 58 switches the determination value from the first determination value to the second determination value. In Step S40, the determination device 58 performs the highly accurate inspection on the single-faced cardboard sheet D, based on the second determination value.

In Step S41, it is determined whether or not the transport speed of the single-faced cardboard sheet D is lowered to a speed slower than the inspection speed. Here, if it is determined that the transport speed of the single-faced cardboard sheet D is not lowered to the speed slower than the inspection speed (No), in Step S42, the control device 53 determines whether or not a sheet width change command or a flute change command of the single-faced cardboard sheet D is input. The production management device 65 previously recognizes the number of the double-faced cardboard sheets F having a predetermined width or a predetermined flute shape, and a timing for changing the sheet width or the flute shape is input to the control device 53 from the production management device 65.

Here, if it is determined that there is no sheet width change or no flute change of the single-faced cardboard sheet D (No), the highly accurate inspection in Step S40 is continuously performed. On the other hand, if it is determined that there is the sheet width change or the flute change of the single-faced cardboard sheet D (Yes), the process returns to Step S33. After the sheet width change or the flute change, the inspection positions in the width direction are set again in the single-faced cardboard sheet D whose sheet width or flute is changed. Then, as described above, the processes from Step S34 to Step S41 are performed.

On the other hand, in Step S41, if it is determined that the transport speed of the single-faced cardboard sheet D is lowered to the speed slower than the inspection speed (Yes), the inspection of the single-faced cardboard sheet D is completed by the cardboard sheet defect detection device 40, and the operation of the corrugating machine 10 is stopped in Step S43.

Next, processes of the determination device 58 of the cardboard sheet defect detection device 40 will be described.

As illustrated in Figs. 3 and 16, if the corrugating machine 10 starts to be operated at time t1, the transport speed of the back liner C, the core B, and the front liner A is raised. At time t2, the transport speed of the single-faced cardboard sheet D reaches the inspection speed. Here, based on the width dimension of the single-faced cardboard sheet D, the non-inspection regions M0 are set in the respective end portions in the width direction in the single-faced cardboard sheet D, and the plurality of inspection positions N1, N2, N3 ..., N27, and N28 are set in the inspection region M1 between the non-inspection regions M0 of the respective end portions. Then, at time t3, if the plurality of inspection positions N1, N2, N3 ..., N27, and N28 are set in the single-faced cardboard sheet D, the normal inspection of the single-faced cardboard sheet D starts to be performed using the first determination value.

Then, the transport speed of the single-faced cardboard sheet D exceeds the second determination value calculation speed, and is maintained at the constant speed at time t4. The second determination value starts to be calculated at time t5 at which a predetermined time elapses from when the transport speed of the single-faced cardboard sheet D is maintained at the constant speed. If the second determination value is set at time t6, the determination value is switched from the first determination value to the second determination value, and the highly accurate inspection of the single-faced cardboard sheet D starts to be performed using the second determination value.

Thereafter, due to the sheet width change in the single-faced cardboard sheet D, the transport speed of the single-faced cardboard sheet D is lowered at time t7. If the transport speed of the single-faced cardboard sheet D is lowered to the constant speed slower than the second determination value calculation speed, the sheet splice portion of the single-faced cardboard sheet D passes the imaging position imaged by the imaging device 52 at time t8 to time t9. At time t9, the highly accurate inspection using the second determination value is switched to the normal inspection using the first determination value. Here, the plurality of inspection positions N1, N2, N3 ..., N27, and N28 are set again in the single-faced cardboard sheet D, and the transport speed of the single-faced cardboard sheet D exceeds the second determination value calculation speed. At time t10 at which the transport speed is maintained at the constant speed for a predetermined time, the second determination value starts to be calculated. If the second determination value is set at time t11, the determination value is switched from the first determination value to the second determination value, and the highly accurate inspection of the single-faced cardboard sheet D starts to be performed using the second determination value.

In addition, due to the flute change in the single-faced cardboard sheet D, the transport speed of the single-faced cardboard sheet D is lowered at time t12. If the transport speed of the single-faced cardboard sheet D is lowered to the constant speed slower than the second determination value calculation speed, the sheet splice portion of the single-faced cardboard sheet D passes the imaging position imaged by the imaging device 52 at time t13 to time t14. At time t14, the highly accurate inspection using the second determination value is switched to the normal inspection using the first determination value. Here, the plurality of inspection positions N1, N2, N3 ..., N27, and N28 are set again in the single-faced cardboard sheet D, and the transport speed of the single-faced cardboard sheet D exceeds the second determination value calculation speed. At time t15 at which the transport speed is maintained at the constant speed for a predetermined time, the second determination value starts to be calculated. If the second determination value is set at time t16, the determination value is switched from the first determination value to the second determination value, and the highly accurate inspection of the single-faced cardboard sheet D starts to be performed using the second determination value.

Then, at time t17, the transport speed of the single-faced cardboard sheet D is lowered. At time t18, if the transport speed of the single-faced cardboard sheet D is lowered to the speed slower than the inspection speed, the inspection of the single-faced cardboard sheet D is completed by the cardboard sheet defect detection device 40, and the operation of the corrugating machine 10 is stopped at time t19.

In this way, in the cardboard sheet defect detection device according to the present embodiment, the cardboard sheet defect detection device 40 for detecting the defect of the corrugated core B bonded to the back liner C has the imaging device 52 that images the core B of the single-faced cardboard sheet D, the inspection position setting device 56 that sets the plurality of inspection positions in the width direction of the single-faced cardboard sheet D, based on the width information of the single-faced cardboard sheet D, and the determination device 58 that determines the quality of the single-faced cardboard sheet D, based on the captured image at the plurality of inspection positions set by the inspection position setting device 56 from the captured image captured by the imaging device 52.

Therefore, based on the width information of the single-faced cardboard sheet D, the plurality of inspection positions in the width direction of the single-faced cardboard sheet D are set. Based on the captured image at the plurality of inspection positions from the captured image captured by the imaging device 52, the determination device 58 determines the quality of the single-faced cardboard sheet D. Accordingly, the determination device 58 determines the quality of the single-faced cardboard sheet D, based on the captured image at an optimum inspection position in the width direction of the single-faced cardboard sheet D. As a result, the defect detection accuracy of the single-faced cardboard sheet D can be improved by reducing the non-inspection regions at the end portions of the single-faced cardboard sheet D.

In the cardboard sheet defect detection device according to the present embodiment, the inspection position setting device 56 sets the non-inspection regions M0 in the respective end portions in the width direction in the single-faced cardboard sheet D, and sets the plurality of inspection positions at every predetermined interval in the inspection region M1 set between the non-inspection regions M0 of the respective end portions. Therefore, the non-inspection regions M0 are first set to the respective end portions in the width direction in the single-faced cardboard sheet D, and thereafter, the plurality of inspection positions are set in the inspection region M1 set between the respective non-inspection regions M0. In this manner, regardless of the width dimension of the single-faced cardboard sheet D, it is possible to set the non-inspection region M0 having a desired dimension. Therefore, it is possible to prevent the non-inspection region M0 from being widened after the width of the single-faced cardboard sheet D is changed.

In the cardboard sheet defect detection device according to the present embodiment, the plurality of inspection positions are set in the inspection region M1 at an equal interval. Therefore, it is possible to prevent variations in the quality determination accuracy of the single-faced cardboard sheet D.

In the cardboard sheet defect detection device according to the present embodiment, the setting density of the plurality of inspection positions on each end portion side in the width direction of the single-faced cardboard sheet D is set to be higher than the setting density of the plurality of inspection positions on the center side in the width direction of the single-faced cardboard sheet D. Therefore, the interval in the plurality of inspection positions is narrowed on each end portion side in the width direction of the single-faced cardboard sheet D, and the interval in the plurality of inspection positions is widened on the center side. In this manner, the end portion side on which a bonding defect is likely to occur can be inspected in detail, and the quality determination accuracy of the single-faced cardboard sheet D can be improved.

The cardboard sheet defect detection device according to the present embodiment has the notification device 54 that notifies an operator of the defect occurrence when the defect of the single-faced cardboard sheet D is determined by the determination device 58. Therefore, the operator is notified of the defect occurrence when the defect of the single-faced cardboard sheet D is determined. In this manner, an earlier countermeasure can be taken by notifying the operator of the defect occurrence.

In the cardboard sheet defect detection device according to the present embodiment, the notification device 54 issues an alarm. Therefore, the alarm is issued when the defect of the single-faced cardboard sheet D is determined. In this manner, the operator can be accurately notified of the defect occurrence.

The cardboard sheet defect detection device according to the present embodiment has the display device 55 that displays the image of the single-faced cardboard sheet D which is determined by the determination device 58. Therefore, when the defect of the single-faced cardboard sheet D is determined, the image of the single-faced cardboard sheet D determined as the defect is displayed on the display device 55. In this manner, the operator can recognize a form of the defect by using the image displayed on the display device 55.

The cardboard sheet defect detection device according to the present embodiment has the storage device 59 that stores the image of the single-faced cardboard sheet D which is determined by the determination device 58. Therefore, when the defect of the single-faced cardboard sheet D is determined, the image of the single-faced cardboard sheet D determined as the defect is stored in the storage device 59. In this manner, the operator can recognize a form of the defect later by using the image stored in the storage device 59.

In the cardboard sheet defect detection device according to the present embodiment, when the width dimension of the single-faced cardboard sheet D is changed, the inspection position setting device 56 resets the plurality of inspection positions in the width direction of the single-faced cardboard sheet D, based on the width information of the single-faced cardboard sheet D. Therefore, each time the width dimension of the single-faced cardboard sheet D is changed, the plurality of inspection positions are set in the width direction of the single-faced cardboard sheet D. In this manner, the quality of the single-faced cardboard sheet D is always determined based on the captured image at an optimum inspection position with respect to the width dimension of the single-faced cardboard sheet D.

In the cardboard sheet defect detection device according to the present embodiment, the determination device 58 determines the quality of the single-faced cardboard sheet D by comparing the captured image captured by the imaging device 52 with the shape determination value of the core B. The shape determination value has the preset first determination value and the second determination value set based on the captured image captured by the imaging device 52 after the quality starts to be determined using the first determination value. The determination device 58 can switch between the first determination value and the second determination value.

Therefore, when the quality of the single-faced cardboard sheet D is determined by comparing the captured image and the shape determination value of the core B with each other from the captured image captured by the imaging

EP 3 608 096 A1

device 52, the determination device 58 determines the quality of the single-faced cardboard sheet D by comparing the captured image and the first determination value with each other. The determination device 58 sets the second determination value, based on the captured image captured by the imaging device 52 after the quality starts to be determined using the first determination value. If the second determination value is set, the determination device 58 switches the first determination value to the second determination value, and determines the quality of the single-faced cardboard sheet D by comparing the captured image with the second determination value. As a result, the quality of the single-faced cardboard sheet D is determined using the second determination value corresponding to characteristics of the imaging device. In this manner, the defect detection accuracy of the single-faced cardboard sheet D can be improved.

In the cardboard sheet defect detection device according to the present embodiment, the determination device 58 determines the quality of the single-faced cardboard sheet D by comparing the captured image at the plurality of inspection positions in the width direction of the single-faced cardboard sheet D with the shape determination value set for each of the plurality of inspection positions. The first determination value is set to the constant value corresponding to the plurality of inspection positions, and the second determination value is set to the individual value corresponding to the plurality of inspection positions. Therefore, the determination device 58 sets the constant value corresponding to the plurality of inspection positions, as the first determination value, and sets the second determination value, as the individual value corresponding to the plurality of inspection positions. In this manner, the first determination value can be easily set in advance using a design value of the single-faced cardboard sheet D, and a result of the quality determination of the single-faced cardboard sheet D is used by the first determination value. In this manner, the second determination value can be highly accurately set in accordance with the plurality of inspection positions.

In the cardboard sheet defect detection device according to the present embodiment, the determination device 58 sets the second determination value, based on the captured image in which the quality product is determined using the first determination value. Therefore, the second determination value is set based on the captured image of the quality product. Accordingly, the second determination value corresponding to the characteristics of the imaging device 52 can be highly accurately set, and the defect detection accuracy of the single-faced cardboard sheet D can be improved.

In the cardboard sheet defect detection device according to the present embodiment, the second determination value is set based on the average value of the plurality of captured images in which the quality product is determined using the first determination value by the determination device 58. Therefore, the second determination value can be highly accurately set corresponding to the characteristics of the imaging device 52.

In the cardboard sheet defect detection device according to the present embodiment, the second determination value is set by adding the preset margin value to the average value of the plurality of captured images in which the quality product is determined using the first determination value by the determination device 58. Therefore, the second determination value can be highly accurately set corresponding to the characteristics of the imaging device 52.

In the cardboard sheet defect detection device according to the present embodiment, the second determination value is set based on the maximum value or the minimum value of the plurality of captured images in which the quality product is determined using the first determination value by the determination device 58. Therefore, the region of the second determination value can be highly accurately set corresponding to the characteristics of the imaging device 52.

In the cardboard sheet defect detection device according to the present embodiment, the second determination value is set by adding the preset margin value to the maximum value or the minimum value of the plurality of captured images in which the quality product is determined using the first determination value by the determination device 58. Therefore, the region of the second determination value can be highly accurately set corresponding to the characteristics of the imaging device 52.

That is, as illustrated in Fig. 17, at the plurality of inspection positions N1, N2, N3 ..., N27, and N28 in the width direction of the single-faced cardboard sheet D, the average value of the flute ratios at a predetermined length in the transport direction of the single-faced cardboard sheet D varies up and down in the width direction of the single-faced cardboard sheet D due to the characteristics (convergence difference or distortion of the lens 76 or passing position of the light with respect to the lens 76) of the imaging device 52. Therefore, the determination device 58 sets the second upper limit value and the second lower limit value by adding and subtracting the margin values $\alpha$ and $\beta$ to and from the average value of the flute ratios of the single-faced cardboard sheet D in which the quality product is determined using the first determination value. In addition, the determination device 58 sets the second upper limit value and the second lower limit value by adding and subtracting the margin values $\alpha1$ and $\beta1$ to and from the maximum value or the minimum value of the flute ratios of the single-faced cardboard sheet D in which the quality product is determined using the first determination value. The determination value using the second upper limit value and the second lower limit value is the individual value which varies at the respective inspection positions N1, N2, N3 ..., N27, and N28 along the average value, the maximum value, and the minimum value. Therefore, the region for determining the quality product is narrowed by the determination region using the first upper limit value and the first lower limit value, and thus, only the high-quality single-faced cardboard sheet D can be determined as the quality product. In addition, in the determination using the first determination value, the single-faced cardboard sheet D erroneously determined as the defective product can be determined as the quality product.

In the cardboard sheet defect detection device according to the present embodiment, the second determination value is set after the transport speed of the single-faced cardboard sheet D reaches the preset second determination value setting speed and is maintained at the constant speed. Therefore, the imaging device 52 images the single-faced cardboard sheet D transported at the constant speed. Accordingly, the plurality of captured images captured by the imaging device 52 are optimized, and thus, the defect detection accuracy of the single-faced cardboard sheet D can be improved.

In the cardboard sheet defect detection device according to the present embodiment, the second determination value is set after the preset predetermined time elapses from when the transport speed of the single-faced cardboard sheet D is maintained at the constant speed. Therefore, the imaging device 52 images the core B in a state where the transport state of the single-faced cardboard sheet D is stable, and thus, the defect detection accuracy of the single-faced cardboard sheet D can be improved by optimizing the captured image.

In the cardboard sheet defect detection device according to the present embodiment, when the type of the single-faced cardboard sheet D is changed, the determination device 58 switches the second determination value to the first determination value, and sets the second determination value, based on the captured image captured by the imaging device 52 after the quality starts to be determined using the first determination value. Therefore, if the type of the single-faced cardboard sheet D is changed, the determination device 58 switches the quality determination using the second determination value to the quality determination using the first determination value, and resets the second determination value. In this manner, the quality of the single-faced cardboard sheet D can be continuously determined, and an optimum second determination value can be set corresponding to the type of the single-faced cardboard sheet D.

In the cardboard sheet defect detection device according to the present embodiment, the second determination value is switched to the first determination value by the determination device 58, when the sheet splice portion of the single-faced cardboard sheet D passes the imaging position imaged by the imaging device 52. Therefore, the sheet splice portion of the single-faced cardboard sheet D is determined as the defect by another defect detection device. Accordingly, when the sheet splice portion of the single-faced cardboard sheet D passes the imaging position, the second determination value is switched to the first determination value. In this manner, it is possible to prevent a possibility that the defective product may not be detected or a possibility that the quality product may be erroneously detected.

The cardboard sheet defect detection device according to the present embodiment has the irradiation device 51 that irradiates the core B with the parallel light S at the irradiation angle $\theta1$ inclined as much as the preset predetermined angle with respect to the perpendicular line L1 of the single-faced cardboard sheet D, the imaging device 52 that images the irradiated portion of the parallel light S in the core B, the shaded image processing device 57 that defines the bright section W and the dark section G along the transport direction of the single-faced cardboard sheet D, based on the captured image captured by the imaging device 52, and the determination device 58 that determines the quality by comparing the length W1 of the bright section W and the length G1 of the dark section G which are defined by the shaded image processing device 57 with the preset determination value (determination region).

Therefore, if the irradiation device 51 irradiates the core B of the single-faced cardboard sheet D transported by the guide roller 45 with the parallel light S, the imaging device 52 images the irradiation portion of the parallel light S in the core B. The shaded image processing device 57 defines the bright section W and the dark section G along the transport direction of the single-faced cardboard sheet D, based on the captured image. The determination device 58 determines the quality of the single-faced cardboard sheet D by comparing the length W1 of the bright section W and the length G1 of the dark section G with the determination value (determination region). In this case, the defect of the core B, that is, the defect of the double-faced cardboard sheet F is detected based on the lengths W1 and G1 of the bright section W and the dark section G which are formed by the shade of the tip of the corrugated core B. Therefore, the crushed defect, the height defect, and the length defect of the tip of the core B can be detected, and the defect of the double-faced cardboard sheet F which is caused by the deformation of the corrugated tip in the core B can be highly accurately detected.

In this case, the shaded image processing device 57 may define the bright section W or the dark section G along the transport direction of the single-faced cardboard sheet D, based on the captured image. The determination device 58 may determine the quality of the single-faced cardboard sheet D by comparing the length W1 of the bright section W or the length G1 of the dark section G with the determination value (bright section determination value and dark section determination value). The number of the inspection positions of the single-faced cardboard sheet D which are detected by the defect detection device 40 depends on processing capacity of the determination device 58. Accordingly, in a case where the determination device 58 determines the quality of the single-faced cardboard sheet D by comparing any one of the length G1 of the dark section G and the length W1 of the bright section W with the determination value (bright section determination value and dark section determination value), the number of the inspection positions of the single-faced cardboard sheet D which are detected by defect detection device 40 can be increased, and thus, the defect of the double-faced cardboard sheet F can be highly accurately detected.

In addition, the cardboard sheet defect removal device according to the present embodiment has the cardboard sheet defect detection device 40 and the defective product discharge device 26 that discharges the double-faced cardboard sheet F cut into the predetermined length which includes the defective location detected by the cardboard sheet defect detection device 40.

Therefore, the defect of the core B, that is, the cardboard sheet defect detection device 40 detects the defect of the double-faced cardboard sheet F, based on the lengths W1 and G1 of the bright section W and the dark section G which are formed by the shade of the tip of the corrugated core B. Therefore, the crushed defect, the height defect, and the length defect of the tip of the core B can be detected, and the defect of the double-faced cardboard sheet F which is caused by the deformation of the corrugated tip in the core B can be highly accurately detected. Accordingly, only the double-faced cardboard sheet F serving as the quality product can be transported.

In addition, the cardboard sheet production device according to the present embodiment has the single facers 13 and 17 that produce the single-faced cardboard sheet D by bonding the back liner C to the corrugated core B, the double facer 22 that produces the double-faced cardboard sheet E by bonding the front liner A to the core B side in the single-faced cardboard sheet D produced by the single facers 13 and 17, and the cardboard sheet defect removal device 60.

Therefore, the single facers 13 and 17 produce the single-faced cardboard sheet D by bonding the back liner C to the corrugated core B. The double facer 22 produces the double-faced cardboard sheet E by bonding the front liner A to the core B side in the single-faced cardboard sheet D. In this case, the cardboard sheet defect removal device 60 detects the defect of the single-faced cardboard sheet D. The defective product discharge device 26 discharges the double-faced cardboard sheet F cut into the predetermined length which includes the defective location, and removes the double-faced cardboard sheet F from the transport line. Therefore, the defect detection accuracy of the single-faced cardboard sheet D can be improved by reducing the non-inspection regions M0 at in the end portion of the single-faced cardboard sheet D.

In the cardboard sheet production device according to the present embodiment, when the cardboard sheet defect detection device 40 determines the defect of the single-faced cardboard sheet D, the transport speed of the single-faced cardboard sheet D is lowered. Therefore, when the single facers 13 and 17 bond the back liner C (C1 and C2) to the corrugated core B (B1 and B2), the corrugated core B (B1 and B2) is glued. Thereafter, the back liner C (C1 and C2) is pressed, heated, and bonded so as to produce the single-faced cardboard sheet D (D1 and D2). When the defect of the single-faced cardboard sheet D occurs, the transport speed of the single-faced cardboard sheet D is lowered. In this manner, a pressing time or a heating time of the single-faced cardboard sheet D can be increased, and the bonding defect can be prevented from occurring.

In the embodiment described above, the determination device 58 is configured to determine the quality of the single-faced cardboard sheet D by comparing a ratio (flute ratio) between the length of the dark section G and the length of the bright section W, the length W1 of the bright section W, and the length G1 of the dark section G with the bright section determination value and the dark section determination value (determination region). However, the embodiment is not limited to this configuration. For example, a sum value WG of the length W1 of the bright section W and the length G1 of the dark section G may be compared with the determination value. In addition, the determination value may be calculated using a movement average of the length of the dark section G and the length of the bright section W after the inspection is performed.

In addition, for example, the second determination value setting unit 58b may use the length W1 of the bright section W (length G1 of the dark section G) of the single-faced cardboard sheet D in which the quality product is determined using the first determination value by the determination device 58, and may calculate the standard deviation of the plurality of data items (the length W1 of the bright section W or the length G1 of the dark section G) at the respective inspection position N1, N2, N3 ..., N27, and N28 so as to set the standard deviation as the margin value. That is, the second upper limit value and the second lower limit value are set by adding the standard deviation serving as the margin value to the average value of the plurality items of data items (the length W1 of the bright section W or the length G1 of the dark section G). The standard deviation may be multiplied by a correction factor (for example, a natural number such as 1, 2, 3 ...) so as to define the determination region.

In addition, without using the irradiation device 51, the quality of the single-faced cardboard sheet D may be determined by comparing the imaging data captured by the imaging device 52 with the shape determination image (shape determination value) of the core B set based on design data (specifications). In this case, the imaging data and the shape determination image may be the shape of the imaged core B. The second determination value serving as the shape determination image may be a determination reference image, or may be the shape of the core B, that is, a shape determination image region set by adding and subtracting the margin value to and from the average value, the maximum value, and the minimum value of the heights and the widths of the core B.

In the embodiment described above, the number of the respective inspection positions N1, N2, N3 ..., N27, and N28 set in the inspection region M1 may be appropriately set without being limited to 28. The setting method of the second determination value is not limited to a method of adding and subtracting the margin value to and from the average value, the maximum value, and the minimum value of the flute ratios, and the second determination value may be set using the length of the dark section G, the length of the bright section W, or the movement average.

In addition, in the embodiment described above, the corrugating machine 10 produces the double-wall cardboard sheet in which the single-faced cardboard sheet D1, the single-faced cardboard sheet D2, and the front liner A are bonded together. However, the double-faced cardboard sheet may be produced by bonding the single-faced cardboard sheet D2 (D1) and the front liner A to each other.

Reference Signs List

10: corrugating machine (cardboard sheet production device)
11, 12, 15, 16, 19: mill roll stand
13, 17: single facer
14, 18: bridge
20: preheater
21: glue machine
22: double facer
23: rotary shear
24: slitter scorer
25: cutoff
26: defective product discharge device
27: stacker
40: cardboard sheet defect detection device
40A: first defect detection device
40B: second defect detection device
43, 44, 45, 46: guide roller
51: irradiation device
52: imaging device
53: control device
54: notification device
55: display device
56: inspection position setting device
57: shaded image processing device
58: determination device
58a: first determination value setting unit
58b: second determination value setting unit
59: storage device
60: cardboard sheet defect removal device
61: defect position specifying device
62: tracking device
65: production management device
66: rotary encoder
75: imaging sensor element
76: lens
A: front liner (first liner)
B: core
C: back liner (second liner)
D: single-faced cardboard sheet
E, F: double-faced cardboard sheet
W: bright section
G: dark section

**Claims**

1. A cardboard sheet defect detection device for detecting a defect of a corrugated core bonded to a liner, the device comprising:

   an imaging device that images the core of a single-faced cardboard sheet formed by bonding the corrugated core to the liner, over an entire region in a width direction;
an inspection position setting device that sets a plurality of inspection positions in the width direction of the cardboard sheet, based on width information of the cardboard sheet; and
a determination device that determines a quality of the cardboard sheet, based on a captured image at the plurality of inspection positions set by the inspection position setting device from the captured image in the entire region in the width direction which is imaged by the imaging device.

2. The cardboard sheet defect detection device according to Claim 1,
wherein the inspection position setting device sets non-inspection regions in respective end portions in the width direction in the cardboard sheet, and sets the plurality of inspection positions at every predetermined interval in an inspection region set between the non-inspection regions of the respective end portions.

3. The cardboard sheet defect detection device according to Claim 2,
wherein the plurality of inspection positions are set in the inspection region at an equal interval.

4. The cardboard sheet defect detection device according to Claim 2,
wherein setting density of the plurality of inspection positions on each end portion side in the width direction of the cardboard sheet is set to be higher than setting density of the plurality of inspection positions on a center side in the width direction of the cardboard sheet.

5. The cardboard sheet defect detection device according to any one of Claims 1 to 4, further comprising:
a notification device that performs notification of defect occurrence when the defect of the cardboard sheet is determined by the determination device.

6. The cardboard sheet defect detection device according to Claim 5,
wherein the notification device issues an alarm.

7. The cardboard sheet defect detection device according to any one of Claims 1 to 6, further comprising:
a display device that displays an image of the cardboard sheet which is determined by the determination device.

8. The cardboard sheet defect detection device according to any one of Claims 1 to 7, further comprising:
a storage device that stores an image of the cardboard sheet which is determined by the determination device.

9. The cardboard sheet defect detection device according to any one of Claims 1 to 8,
wherein when a width dimension of the cardboard sheet is changed, the inspection position setting device resets the plurality of inspection positions in the width direction of the cardboard sheet, based on the width information of the cardboard sheet.

10. The cardboard sheet defect detection device according to any one of Claims 1 to 9,
wherein the determination device determines the quality of the cardboard sheet by comparing the captured image captured by the imaging device and a shape determination value of the core with each other,
wherein the shape determination value has a first determination value to be set in advance, and a second determination value to be set based on the captured image captured by the imaging device after the quality starts to be determined using the first determination value, and
wherein the determination device is capable of switching between the first determination value and the second determination value.

11. The cardboard sheet defect detection device according to Claim 10,
wherein the determination device determines the quality of the cardboard sheet by comparing the captured image at the plurality of inspection positions in the width direction of the cardboard sheet and the shape determination value set at each of the plurality of inspection positions, and
wherein the first determination value is set to a constant value corresponding to the plurality of inspection positions, and the second determination value is set to an individual value corresponding to the plurality of inspection positions.

12. The cardboard sheet defect detection device according to Claim 10 or 11,
wherein the second determination value is set based on the captured image in which a quality product is determined using the first determination value by the determination device.

**13.** The cardboard sheet defect detection device according to Claim 12,
wherein the second determination value is set based on an average value of the plurality of captured images in whi ch the quality product is determined using the first determ ination value by the determination device.

**14.** The cardboard sheet defect detection device according to Claim 13,
wherein the second determination value is set by addin g a preset margin value to the average value of the pluralit y of captured images in which the quality product is determi ned using the first determination value by the determinatio n device.

**15.** The cardboard sheet defect detection device according to Claim 12,
wherein the second determination value is set based on a maximum value or a minimum value of the plurality of capt ured images in which the quality product is determined usin g the first determination value by the determination device.

**16.** The cardboard sheet defect detection device according to Claim 15,
wherein the second determination value is set by addin g a preset margin value to the maximum value or the minimum value of the plurality of captured images in which the quali ty product is determined using the first determination valu e by the determination device.

**17.** The cardboard sheet defect detection device according to any one of Claims 10 to 16,
wherein the second determination value is set after a transport speed of the cardboard sheet reaches a preset det ermination value setting speed and is maintained at a const ant speed.

**18.** The cardboard sheet defect detection device according to Claim 17,
wherein the second determination value is set after a preset predetermined time elapses from when the transport s peed of the cardboard sheet is maintained at the constant sp eed.

**19.** The cardboard sheet defect detection device according to any one of Claims 10 to 18,
wherein when a type of the cardboard sheet is changed, the determination device switches the second determination value to the first determination value, and sets the second determination value, based on the captured image captured by the imaging device after the quality starts to be determi ned using the first determination value.

**20.** The cardboard sheet defect detection device according to Claim 19,
wherein the second determination value is switched to the first determination value by the determination device w hen a sheet splice portion of the cardboard sheet passes an imaging position imaged by the imaging device.

**21.** The cardboard sheet defect detection device according to any one of Claims 1 to 20, further comprising:

an irradiation device that irradiates the core with li ght at an irradiation angle inclined as much as a preset pre determined angle with respect to the cardboard sheet; and
an image processing device that defines at least any o ne of a bright section and a dark section along a transport direction of the cardboard sheet, based on the captured ima ge captured by the imaging device,
wherein the determination device determines the quali ty by comparing a preset determination value with at least a ny one of a length of the bright section and a length of the dark section which are defined by the image processing devi ce.

**22.** A cardboard sheet defect removal device comprising:

the cardboard sheet defect detection device according to any one of Claims 1 to 21; and
a discharge device that discharges a double-faced card board sheet cut into a predetermined length which includes a defective location detected by the cardboard sheet defect detection device.

**23.** A cardboard sheet production device comprising:

a single facer that produces a single-faced cardboard sheet by bonding a second liner to a corrugated core;
a double facer that produces a double-faced cardboard sheet by bonding a first liner to the core side in the singl e-faced cardboard sheet; and
the cardboard sheet defect removal device according to Claim 22.

24. The cardboard sheet production device according to Claim 23,
wherein when the defect of the cardboard sheet is determined by the cardboard sheet defect detection device, the transport speed of the cardboard sheet is lowered.

EP 3 608 096 A1

# FIG. 1

# FIG. 2

## FIG. 3

NOTIFICATION DEVICE 54

DISPLAY DEVICE 55

PRODUCTION MANAGEMENT DEVICE 65

CONTROL DEVICE 53

INSPECTION POSITION SETTING DEVICE 56

DETERMINATION DEVICE 58

58a

58b

SHADED IMAGE PROCESSING DEVICE 57

STORAGE DEVICE 59

DEFECTIVE PRODUCT DISCHARGE DEVICE 26

DEFECT POSITION SPECIFYING DEVICE 61

TRACKING DEVICE 62

40 (40A, 40B)

43 (43a, 43b)

60

D (B, C)

52

72

51

71

44 (44a, 44b)

66

45 (45a, 45b)

46 (46a, 46b)

## FIG. 4

## FIG. 5

## FIG. 6

## FIG. 7

## FIG. 8

## FIG. 9

# FIG. 10

```
            START
              │
              ▼                    ╱S11
        ┌──────────────┐
        │   PROJECT    │
        └──────────────┘
              │
              ▼                    ╱S12
        ┌──────────────┐
        │  SMOOTHING   │
        └──────────────┘
              │
              ▼                    ╱S13
        ┌──────────────┐
        │  DIFFERENCE  │
        └──────────────┘
              │
              ▼                    ╱S14
        ┌──────────────┐
        │ DETECT EDGE  │
        └──────────────┘
              │
              ▼                                    ╱S15
        ┌──────────────────────────────────────┐
        │ CALCULATE LENGTH OF BRIGHT SECTION AND│
        │      LENGTH OF DARK SECTION           │
        └──────────────────────────────────────┘
              │
              ▼                                    ╱S16
        ┌──────────────────────────────────────┐
        │ CALCULATE RATIO BETWEEN LENGTH OF     │
        │ BRIGHT SECTION AND LENGTH OF DARK     │
        │              SECTION                  │
        └──────────────────────────────────────┘
              │
              ▼              ╱S17
```

DOES FLUTE RATIO FALL WITHIN DETERMINATION REGION? — No

Yes — S18

DETERMINE AS NORMAL

S19 — DETERMINE AS ABNORMAL

S20 — OPERATE NOTIFICATION DEVICE

S21 — OPERATE DISPLAY DEVICE

S22 — REMOVE DEFECT

END

## FIG. 11

(a)          (b)          (c)          (d)

## FIG. 12

# FIG. 13

START

↓

PROJECT ⟋S51

↓

SMOOTHING ⟋S52

↓

DIFFERENCE ⟋S53

↓

DETECT EDGE ⟋S54

↓

CALCULATE LENGTH OF BRIGHT SECTION ⟋S55

↓

DOES LENGTH OF BRIGHT SECTION FALL WITHIN FIRST DETERMINATION REGION? ⟋S56

No → DETERMINE AS ABNORMAL ⟋S58 → REMOVE DEFECT ⟋S59

Yes → DETERMINE AS NORMAL ⟋S57

↓

END

## FIG. 14

```
          ( START )
              │
              ▼                    ╭S61
     ┌─────────────────────┐
     │       PROJECT        │
     └─────────────────────┘
              │                    ╭S62
              ▼
     ┌─────────────────────┐
     │      SMOOTHING       │
     └─────────────────────┘
              │                    ╭S63
              ▼
     ┌─────────────────────┐
     │      DIFFERENCE      │
     └─────────────────────┘
              │                    ╭S64
              ▼
     ┌─────────────────────┐
     │     DETECT EDGE      │
     └─────────────────────┘
              │                    ╭S65
              ▼
     ┌──────────────────────────────────┐
     │ CALCULATE LENGTH OF BRIGHT SECTION AND │
     │      LENGTH OF DARK SECTION        │
     └──────────────────────────────────┘
              │
              ▼                    S66
          ╱ DOES LENGTH ╲
     ╱ OF BRIGHT SECTION FALL WITHIN FIRST ╲ ──No──┐
     ╲   DETERMINATION REGION?   ╱                 │
          ╲           ╱                            │
              │ Yes                                │
              ▼                    S67             │
          ╱ DOES LENGTH ╲                          │
     ╱ OF DARK SECTION FALL WITHIN SECOND ╲ ──No──┤
     ╲    DETERMINATION REGION?    ╱               │
          ╲           ╱                            ▼              ╭S69
              │ Yes         ╭S68          ┌─────────────────────────┐
              ▼                           │  DETERMINE AS ABNORMAL   │
     ┌─────────────────────┐              └─────────────────────────┘
     │  DETERMINE AS NORMAL │                         │            ╭S70
     └─────────────────────┘                          ▼
              │                           ┌─────────────────────────┐
              │                           │     REMOVE DEFECT        │
              │                           └─────────────────────────┘
              │                                       │
              ▼◄──────────────────────────────────────┘
          ( END )
```

# FIG. 15

```
                    ┌──────────────┐
                    │    START     │
                    └──────┬───────┘
                           │              S31
                    ┌──────▼───────────────────┐
                    │     START OPERATION       │
                    └──────┬────────────────────┘
          ┌────────────────┤              S32
          │         ◇──────▼────────────◇
        No│        ╱   DOES SPEED         ╲
          │       ╱ REACH INSPECTION SPEED? ╲
          │        ╲                        ╱
          │         ◇──────┬───────────────◇
          │                │ Yes           S33
          │         ┌──────▼───────────────────┐
          │         │   SET INSPECTION POSITION │
          │         └──────┬────────────────────┘
          │   ┌────────────┤              S34
          │   │     ┌──────▼────────────────────┐
          │   │     │ NORMAL INSPECTION BASED ON FIRST │
          │   │     │    DETERMINATION VALUE    │
          │   │     └──────┬────────────────────┘
          │   │            │              S35
          │   │     ◇──────▼───────────────◇
          │   │  No╱  DOES SPEED            ╲
          │   │───╱  REACH SECOND DETERMINATION ╲
          │   │   ╲  VALUE CALCULATION SPEED?   ╱
          │   │    ◇──────┬───────────────────◇
          │   │           │ Yes          S36
          │   │    ◇──────▼───────────◇
          │   │ No╱ MAINTAIN AT CONSTANT ╲
          │   │──╱      SPEED?           ╲
          │   │   ◇──────┬──────────────◇
          │   │          │ Yes          S37
          │   │   ◇──────▼──────────◇
          │   │No╱  DOES PRESET       ╲
          │   │─╱  PREDETERMINED TIME   ╲
          │   │  ╲      ELAPSE?         ╱
          │   │   ◇──────┬─────────────◇
          │   │          │ Yes         S38
          │   │   ┌──────▼──────────────────────┐
          │   │   │ CALCULATE SECOND DETERMINATION VALUE │
          │   │   └──────┬──────────────────────┘
          │   │          │              S39
          │   │   ┌──────▼──────────────────────┐
          │   │   │ SWITCH TO HIGHLY ACCURATE INSPECTION │
          │   │   └──────┬──────────────────────┘
          │   └──────────┤              S40
          │       ┌──────▼──────────────────────┐
          │       │ PERFORM HIGHLY ACCURATE INSPECTION │
          │       └──────┬──────────────────────┘
          │              │              S41
          │       ◇──────▼──────────◇
          │    No╱ SLOWER THAN INSPECTION ╲
          │  ┌──╱       SPEED?          ╲
          │  │  ◇──────┬───────────────◇
          │  │         │ Yes      S43
          │  │ S42     │
          │ ◇▼─────────◇   ┌──────▼────────────┐
          │╱ SHEET WIDTH CHANGE ╲  │   STOP OPERATION  │
        No│╲      or           ╱  └──────┬────────────┘
          │ ╲  FLUTE CHANGE?   ╱         │
          │  ◇────┬───────────◇    ┌──────▼───────┐
          │       │ Yes             │     END      │
          └───────┘                 └──────────────┘
```

# FIG. 16

EP 3 608 096 A1

## FIG. 17

## INTERNATIONAL SEARCH REPORT

| International application No. |
| --- |
| PCT/JP2018/004740 |

### A. CLASSIFICATION OF SUBJECT MATTER
Int.Cl. B31F1/24(2006.01)i, G01B11/02(2006.01)i, G01N21/892(2006.01)i

According to International Patent Classification (IPC) or to both national classification and IPC

### B. FIELDS SEARCHED
Minimum documentation searched (classification system followed by classification symbols)
Int.Cl. B31F1/24, G01B11/02, G01N21/892

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2009/075025 A1 (PHONIC CO., LTD.) 18 June 2009 & US 2010/0195115 A1 & EP 2101142 A1 | 1-24 |
| A | JP 2016-113233 A (RF SYSTEM CO., LTD.) 23 June 2016 (Family: none) | 1-24 |
| A | JP 06-238782 A (RENGO CO., LTD.) 30 August 1994 (Family: none) | 1-24 |
| A | JP 2002-148027 A (HITACHI, LTD.) 22 May 2002 & US 2002/0054703 A1 | 1-24 |
| A | JP 07-190739 A (SHARP CORP.) 28 July 1995 (Family: none) | 1-24 |

☐ Further documents are listed in the continuation of Box C.    ☐ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| 12 March 2018 (12.03.2018) | 27 March 2018 (27.03.2018) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 3 608 096 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4857382 B